(19) Europäisches Patentamt
European Patent Office
Office européen des brevets

(11) EP 2 397 874 A1

(12) EUROPEAN PATENT APPLICATION
published in accordance with Art. 153(4) EPC

(43) Date of publication:
**21.12.2011 Bulletin 2011/51**

(21) Application number: **10741203.3**

(22) Date of filing: **08.02.2010**

(51) Int Cl.:
***G02B 5/30*** $^{(2006.01)}$ ***B32B 7/02*** $^{(2006.01)}$
***G02F 1/1335*** $^{(2006.01)}$ ***G02F 1/13363*** $^{(2006.01)}$

(86) International application number:
**PCT/JP2010/051783**

(87) International publication number:
**WO 2010/092926 (19.08.2010 Gazette 2010/33)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **13.02.2009 JP 2009031581**
**16.02.2009 JP 2009032199**
**16.02.2009 JP 2009032251**
**16.02.2009 JP 2009032269**

(71) Applicant: **Nitto Denko Corporation**
**Ibaraki-shi**
**Osaka 567-8680 (JP)**

(72) Inventors:
- **NISHIMURA, Akinori**
**Ibaraki-shi**
**Osaka 567-8680 (JP)**
- **YAGINUMA, Hironori**
**Ibaraki-shi**
**Osaka 567-8680 (JP)**
- **YOSHIMI, Hiroyuki**
**Ibaraki-shi**
**Osaka 567-8680 (JP)**
- **TAKEDA, Kentarou**
**Ibaraki-shi**
**Osaka 567-8680 (JP)**
- **INAGAKI, Junichi**
**Ibaraki-shi**
**Osaka 567-8680 (JP)**
- **KINOSHITA, Ryoji**
**Ibaraki-shi**
**Osaka 567-8680 (JP)**
- **KITAGAWA, Takeharu**
**Ibaraki-shi**
**Osaka 567-8680 (JP)**

(74) Representative: **Grünecker, Kinkeldey,**
**Stockmair & Schwanhäusser**
**Leopoldstrasse 4**
**80802 München (DE)**

# (54) LAMINATE OPTICAL BODY, OPTICAL FILM, LIQUID CRYSTAL DISPLAY DEVICE USING SAID OPTICAL FILM, AND METHOD FOR MANUFACTURING LAMINATE OPTICAL BODY

(57) The present invention provides a laminate optical body, which is excellent in production efficiency, shows an extremely small axis shift and can realize a liquid crystal display apparatus showing small display unevenness. The laminate optical body of the present invention includes an elongated polarizing film having an absorption axis in a short direction thereof, and including a base material layer and a hydrophilic polymer layer to which a dichromatic substance adsorbs; and an elongated retardation film having a slow axis in a lengthwise direction thereof. The polarizing film is a laminate including the base material layer and the hydrophilic polymer layer to which a dichromatic substance adsorbs. The laminate optical body is elongated. Preferably, the hydrophilic polymer layer has a thickness of 1 μm to 10 μm.

Fig. 1A

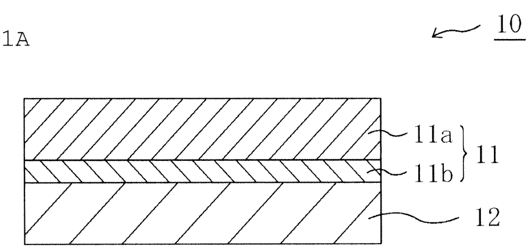


EP 2 397 874 A1

## Description

Technical Field

The present invention relates to a laminate optical body, an optical film and a liquid crystal display apparatus using the optical film, and a method of producing a laminate optical body.

Background Art

A liquid crystal display apparatus includes a polarizing plate as an essential component as a result of its display mechanism. A product obtained by causing a polyvinyl alcohol (PVA)-based film to adsorb a dichromatic substance and uniaxially stretching the resultant has been widely used as the polarizing plate. The absorption axis of such polarizing plate is expressed in a lengthwise direction because the polarizing plate is produced by stretching an elongated PVA-based film in the lengthwise direction.

By the way, in order that the retardation of a liquid crystal cell in a liquid crystal display apparatus may be optically compensated, in many cases, a predetermined retardation film must be provided so that its slow axis may be perpendicular to the absorption axis of a polarizing plate (in actuality, a polarizer in the polarizing plate). In view of the foregoing, a laminate including a polarizing plate and a retardation film (so-called polarizing plate integrated with a retardation plate) is also used in many cases.

In consideration of the production efficiency of the polarizing plate integrated with a retardation plate, attachment by the so-called roll-to-roll process (to continuously attach an elongated polarizing plate and an elongated retardation film to each other with their lengthwise directions aligned while conveying each of the plate and the film in its lengthwise direction) is extremely preferred. In this case, the slow axis of the retardation film to be attached must be expressed in the short direction (TD) of a raw filmbecause the absorption axis of a conventional polarizing plate is in the lengthwise direction (MD) of the raw film. However, it is difficult to express the slow axis of the retardation film in the TD of the raw film. Even if the slow axis is expressed in the TD of the raw film, the direction in which the slow axis is expressed largely shifts from a desired direction in many cases. More specifically, when a retardation film is produced, its slow axis is inevitably expressed in the flow direction (lengthwise direction) of the film at the time of the forming of the film by extrusion or casting, and hence the stretching of the film in its widthwise direction (short direction) for expressing the slow axis in the TD enlarges the shift of the direction of the slow axis. Therefore, when a polarizing plate integrated with a retardation plate is to be produced with a conventional polarizing plate (polarizing plate having an absorption axis in the lengthwise direction of a raw film), attachment by the roll-to-roll process involves a large number of problems, and hence there is no choice but to attach plates one by one by punching. Even if the attachment by the roll-to-roll process is achieved, the shift of the slow axis of the retardation film is so large as described above that it is difficult to realize optical properties that can be put into practical use. Further, the conventional polarizing plate involves such a problem that its dimensions largely change under a high-temperature, high-humidity environment. As a result, even the polarizing plate integrated with a retardation plate involves the following problem. The retardation film distorts owing to the dimensional change of the polarizing plate under a high-temperature, high-humidity environment, and hence retardation unevenness occurs.

When a conventional polarizing plate integrated with a retardation plate (laminate of a polarizing plate having an absorption axis in its MD and a retardation film having a slow axis in its TD) is mounted on a liquid crystal display apparatus, the following problem arises as a result of the above-mentioned problem. Display unevenness or brightness unevenness occurs.

Further, even when a specific retardation film is used, a problem arises in addition to such problem as described above common to polarizing plates integrated with retardation plates. For example, a laminate including a tilt-aligned retardation film (so-called O plate) has been known as an optical compensation film for a twisted nematic (TN) liquid crystal display apparatus. When a laminate is produced with the O plate as a retardation film, the direction (back side and front side) of the tilt alignment of the O plate must be adjusted upon its attachment. However, it is extremely difficult to clarify the direction of the tilt alignment of the O plate at the time of the production of the laminate, and hence a method involving attaching plates one by one involves problems such as a reduction in production efficiency resulting from the operation of observing the direction of the tilt alignment and a reduction in yield due to false attachment. The above-mentioned attachment by the roll-to-roll process is extremely preferred for solving such problems in the method involving attaching plates one by one. As described above, however, the conventional polarizing plate has an absorption axis in the MD of a raw film as a result of its production method, and hence the slow axis of the O plate must be expressed in the TD of the raw film when the attachment by the roll-to-roll process is performed with the slow axis of the O plate perpendicular to the absorption axis. It is extremely difficult to accurately express the slow axis of the O plate in the TD of the raw film as in the case of any other retardation film. Further, in a laminate using the conventional polarizing plate and the O plate, the O plate distorts owing to, for example, the dimensional change (such as shrinkage) of the polarizing plate under a high-temperature, high-humidity environment, and hence the angle of its tilt alignment shifts. As a result,

it may become difficult to realize desired optical compensation.

Citation List

Patent Literature

[PTL 1] JP 2005-49398 A

[PTL 2] JP 2000-121831 A
[PTL 3] JP 2001-337225 A

Summary of Invention

Technical Problem

The present invention has been made to solve the above-mentioned conventional problems, and an object of the present invention is to provide a laminate optical body, which is excellent in production efficiency, shows an extremely small axis shift of the slow axis of its retardation film and extremely small retardation unevenness of the film, and shows an extremely small dimensional change under a high-temperature, high-humidity environment.

Means for solving the Problems

According to one aspect of the present invention, a laminate optical body is provided. The laminate optical body includes an elongated polarizing film having an absorption axis in a short direction thereof, and including a base material layer and a hydrophilic polymer layer to which a dichromatic substance adsorbs; and an elongated retardation film having a slow axis in a lengthwise direction thereof. The laminate optical body is elongated.
In one embodiment of the invention, the hydrophilic polymer layer has a thickness of 1 μm to 10 μm.
In another embodiment of the invention, the base material layer serves also as a protective layer for the hydrophilic polymer layer.
In still another embodiment of the invention, the retardation film contains tilt-aligned molecules. Preferably, the molecules in the retardation film are continuously or intermittently tilted along a thickness direction of the retardation film; and when a tilt angle in a case where the molecules are arranged to be parallel to a plane is set to 0°, a tilt angle on a side of the hydrophilic polymer layer is larger than a tilt angle on a side opposite to the hydrophilic polymer layer by 20° to 70°. Preferably, the tilt-aligned molecules have an average tilt angle of 10° to 40°.
In still another embodiment of the invention, a refractive index ellipsoid of each of the molecules in the retardation film has a relationship of nx>ny=nz. Preferably, the laminate optical body further includes, on a side opposite to the hydrophilic polymer layer of the retardation film, a second elongated retardation film which has a slow axis in a short direction thereof and a refractive index ellipsoid of which has a relationship of nx>ny>nz. Preferably, the second retardation film has an in-plane retardation value $Re_2$ [590] of 80 to 160 nm and an Nz coefficient of 1.1 to 1.8.
In still another embodiment of the invention, a refractive index ellipsoid of each of the molecules in the retardation film has a relationship of nx=ny>nz. Preferably, the retardation film has an in-plane retardation value $Re_1$[590] of 100 nm or less and a thickness direction retardation value $Rth_1$[590] of 50 nm to 200 nm. Preferably, the laminate optical body further includes a second elongated retardation film. The second retardation film has an in-plane retardation value $Re_2$ [590] of less than 100 nm and a thickness direction retardation value $Rth_2$[590] of less than 200 nm. Preferably, the retardation film and the second retardation film have a total in-plane retardation value $Re_{1+2}$[590] of 10 nm or more and less than 200 nm, and a total thickness direction retardation value $Rth_{1+2}$[590] of 50 nm to 300 nm.
According to another aspect of the present invention, a method of producing an elongated laminate optical body is provided. The method includes applying a composition containing a hydrophilic polymer to an elongated base material to form a thin film; stretching the thin film together with the base material; dyeing the stretched thin film to provide an elongated polarizing film including a base material layer and a hydrophilic polymer layer; and continuously attaching the polarizing film and an elongated retardation film to each other while aligning lengthwise directions of the films.
In one embodiment of the invention, the stretching of the thin film is carried out in a short direction thereof together with the base material.
According to still another aspect of the present invention, an optical film is provided. The optical film is obtained by cutting or punching the laminate optical body.
According to still another aspect of the present invention, a liquid crystal display apparatus is provided. The liquid crystal display apparatus includes the optical film and a liquid crystal cell.

## Advantageous Effects of Invention

According to the present invention, an extremely thin polarizing film having an absorption axis in its short direction is used, and hence the film and a retardation film having a slow axis in its lengthwise direction can be laminated by the roll-to-roll process. Therefore, a laminate optical body in which the axis shift of the slow axis of the retardation film is extremely small can be obtained. Further, the dimensions of such extremely thin polarizing film as described above change at so small a rate (particularly under a high-temperature, high-humidity environment) that the distortion of the retardation film resulting from the dimensional change of the polarizing film in the laminate optical body also becomes extremely small. As a result, the retardation unevenness of the laminate optical body becomes extremely small. As a result of synergistic action of the above-mentioned effects, the laminate optical body of the present invention, when incorporated into a liquid crystal display apparatus, can realize a liquid crystal display apparatus showing extremely small display unevenness. In addition, the laminate optical body of the present invention is excellent in production efficiency because the laminate optical body can be produced by the roll-to-roll process.

## Brief Description of Drawings

[FIG. **1A**] FIG. **1A** is a schematic sectional view of a laminate optical body according to a preferred embodiment of the present invention.
[FIG. **1B**] FIG. **1B** is a schematic sectional view of the laminate optical body according to another preferred embodiment of the present invention.
[FIGS. **2**] FIG. **2(a)** is a schematic sectional view for describing a state in which molecules are arranged in tilt alignment and FIG. **2(b)** is a schematic sectional view for describing a state in which molecules are arranged in hybrid alignment.
[FIG. **3**] FIG. **3** is a schematic view describing one step in a method of producing a laminate optical body according to a preferred embodiment of the present invention.
[FIG. **4**] FIG. **4** is a schematic sectional view of a liquid crystal display apparatus according to a preferred embodiment of the present invention.
[FIG. **5A**] FIG. **5A** is a photograph obtained by photographing the display screen (black image) of a liquid crystal display apparatus obtained in Example 1.
[FIG. **5B**] FIG. **5B** is an image showing the brightness distribution of the display screen of the liquid crystal display apparatus obtained in Example 1.
[FIG. **6A**] FIG. **6A** is a photograph obtained by photographing the display screen (black image) of a liquid crystal display apparatus obtained in Example 2.
[FIG. **6B**] FIG. **6B** is an image showing the brightness distribution of the display screen of the liquid crystal display apparatus obtained in Example 2.
[FIG. **7A**] FIG. **7A** is a photograph obtained by photographing the display screen (black image) of a liquid crystal display apparatus obtained in Comparative Example 1.
[FIG. **7B**] FIG. **7B** is an image showing the brightness distribution of the display screen of the liquid crystal display apparatus obtained in Comparative Example 1.
[FIG. **8A**] FIG. **8A** is a photograph obtained by photographing the display screen (black image) of a liquid crystal display apparatus obtained in Comparative Example 2.
[FIG. **8B**] FIG. **8B** is an image showing the brightness distribution of the display screen of the liquid crystal display apparatus obtained in Comparative Example 2.

## Description of Embodiments

Hereinafter, preferred embodiments of the present invention are described. However, the present invention is not limited to these embodiments.

### A. Entire construction of laminate optical body

FIGS. **1** are each a schematic sectional view of a laminate optical body according to a preferred embodiment of the present invention. A laminate optical body **10** is obtained by laminating a polarizing film**11** and a retardation film**12.** The polarizing film**11** is a laminate of a base material layer **11a** and a hydrophilic polymer layer **11b** (which may be referred to as "polarizing thin film" herein). A dichromatic substance adsorbs to the hydrophilic polymer layer **11b.** The laminate optical body **10** is made elongated. The term "elongated" as used herein refers to a product having a length

(lengthwise direction) ten or more times as long as its width (short direction). The laminate optical body of the present invention is preferably of a roll shape.

The polarizing film **11** (substantially the hydrophilic polymer layer **11b**) has an absorption axis in its short direction. The retardation film **12** has a slow axis in its lengthwise direction. Therefore, the absorption axis of the polarizing film and the slow axis of the retardation film are substantially perpendicular to each other. When such elongated polarizing film having an absorption axis in its short direction as described above is used, the film and the retardation filmhaving a slow axis in its lengthwise direction can be attached to each other by the so-called roll-to-roll process. As a result, production efficiency is markedly improved as compared with that in the case where the films are attached one by one. Moreover, the attachment by the roll-to-roll process can markedly reduce variations in a slow axis direction as compared with those in the case where the films are attached one by one. Further, the retardation film having a slow axis in its lengthwise direction can be adopted, and hence the ease with which an elongated retardation film is produced is markedly improved and the slow axis direction of the retardation film can be easily controlled. In addition, the elongated polarizing film having an absorption axis in its short direction can be suitably applied to a large-scale liquid crystal display apparatus or the like because the film can be produced so as to be wide. The fact that an elongated polarizing film having practically acceptable optical properties and having an absorption axis in its short direction was actually produced is one major result in the present invention. It should be noted that the term "short direction" as used herein comprehends a direction substantially parallel to the short direction, and the term "lengthwise direction" as used herein comprehends a direction substantially parallel to the lengthwise direction. The phrase "substantially parallel" comprehends the case where an angle formed between two directions is $0° \pm 1°$, and the angle is preferably $0° \pm 0.5°$. In addition, the phrase "substantially perpendicular" comprehends the case where an angle formed between two directions is $90° \pm 1°$, and the angle is preferably $90° \pm 0.5°$.

The base material layer **11a** can function as a protective film for the hydrophilic polymer layer **11b.** The hydrophilic polymer layer **11b** and the retardation film **12** may be attached to each other through any appropriate adhesive layer or pressure-sensitive adhesive layer (not shown). Any appropriate easy-adhesion layer (such as an easy-adhesion layer of an acrylic resin: not shown) may be provided between the base material layer **11a** and the hydrophilic polymer layer **11b,** and/or between the hydrophilic polymer layer **11b** and the adhesive layer or pressure-sensitive adhesive layer. Further, a protective film (also referred to as "inner protective film": not shown) may be provided between the hydrophilic polymer layer **11b** and the retardation film **12**. In addition, any appropriate surface treated layer (not shown) may be provided depending on purposes on the side opposite to the hydrophilic polymer layer **11b** of the base material layer **11a** (that is, outside the base material layer **11a**). Examples of the surface treated layer include treated layers subjected to a hard coat treatment, an antireflection treatment, an anti-sticking treatment, and a diffusion treatment (antiglare treatment).

Any appropriate retardation film can be adopted as the retardation film **12** as long as the film has a slow axis in its lengthwise direction and an effect of the present invention is obtained. In one embodiment, the refractive index ellipsoid of the retardation film **12** shows a relationship of nx>ny=nz or nx>ny>nz. In another embodiment, the retardation film **12** is the so-called O plate containing tilt-aligned molecules. Details about the retardation film **12** are described in the section A-2 later.

In one embodiment, the laminate optical body of the present invention may further include a second retardation film. The optical properties and placement position of the second retardation film can be appropriately set depending on, for example, purposes and the optical properties of the retardation film **12** (which may hereinafter be referred to as "first retardation film" for convenience). Forexample, a second retardation film **13** may be placed on the side opposite to the hydrophilic polymer layer **11b** of the first retardation film **12** in the laminate optical body **10** as shown in FIG. **1B,** or may be placed between the first retardation film **12** and the hydrophilic polymer layer **11b** (not shown). Details about the second retardation film **13** are described in the section A-3 later.

In one embodiment, the laminate optical body of the present invention may further include a brightness enhancement film (not shown) on the side opposite to the hydrophilic polymer layer **11b** of the base material layer **11a** (that is, outside the base material layer **11a**). In another embodiment, the brightness enhancement film may be directly laminated on the side opposite to the retardation film **12** of the hydrophilic polymer layer **11b** (that is, the brightness enhancement film may be laminated on the hydrophilic polymer layer **11b** after the base material layer **11a** has been released: not shown). The laminate optical body including the brightness enhancement film can be sui tably used as, for example, a polarizing plate on a backlight side. In this case, the laminate optical body is representatively placed so that the brightness enhancement filmmay be on the backlight side. The brightness enhancement film is preferably laminated on the laminate optical body through any appropriate pressure-sensitive adhesive or adhesive. The pressure-sensitive adhesive or adhesive is preferably filled and placed between the brightness enhancement film and the laminate optical body (substantially the base material layer **11a** or the hydrophilic polymer layer **11b**) with no gap therebetween. With such construction, refection at an interface between the laminate optical body and air is suppressed, and hence a reduction in panel brightness can be suppressed. Any appropriate brightness enhancement film can be used as the brightness enhancement film depending on purposes. Examples of the brightness enhancement film include: a multilayer

thin film laminate having two or more layers based on two or more kinds of materials having a refractive index difference; a product obtained by stretching a resin laminate having two or more layers using two or more kinds of resins having refractive indices; and a multilayer thin film laminate having two or more birefringent layers based on two or more kinds of materials having refractive indices. The brightness enhancement film can be, for example, a reflection polarizer commercially available under the trade name "DBEF" from 3M. When the reflection polarizer is used as the brightness enhancement film, the reflection polarizer is placed so that its polarization transmission axis and the absorption axis of the polarizing film **11** may be perpendicular to each other. The use of the reflection polarizer as the brightness enhancement film enables one to attach an elongated brightness enhancement film and an elongated laminate optical body to each other by the roll-to-roll process. That is, the absorption axis of a conventional polarizing plate is in the MD of a raw film, and hence it has been necessary to express the polarization transmission axis of the brightness enhancement film to be attached in the TD. On the other hand, according to the present invention, the elongated brightness enhancement film and the elongated laminate optical body can be attached to each other by the roll-to-roll process because the absorption axis of the polarizing film is in the short direction. It should be noted that the thickness of the brightness enhancement film that can be used in the present invention is representatively about 50 to 200 μm.

The dimensional change rate of the above-mentioned laminate optical body **10** is preferably 0.2% or less, more preferably 0.1% or less under such conditions that the laminate optical body is stored in a thermostatic environment test chamber at 80°C for 500 hours. In addition, the dimensional change rate is preferably 0.12% or less, more preferably 0.08% or less under such conditions that the laminate optical body is stored in a thermo-hygrostat test chamber at 60°C and 90%RH for 500 hours.

A-1. Polarizing film

As described above, the polarizing film **11** is a laminate of the base material layer **11a** and the hydrophilic polymer layer **11b.** The base material layer **11a** and the hydrophilic polymer layer **11b** are representatively laminated in a close fashion without through any adhesive layer or pressure-sensitive adhesive layer. The thickness of the base material layer **11a** is dominant in the thickness of the polarizing film because the hydrophilic polymer layer **11b** is extremely thin, and the thickness of the polarizing film is preferably 10 μm to 90 μm, more preferably 21 μm to 90 μm, particularly preferably 21 μm to 80 μm.

The dimensional change rate of the polarizing film **11** is preferably 2% or less, more preferably 0.5% or less under such conditions that the polarizing film is stored in a thermostatic environment test chamber at 80°C for 500 hours. The dimensional change of the polarizer that expands and shrinks most easily is typically dominant in the dimensional change rate of the polarizing plate. According to the polarizing film used in the present invention the hydrophilic polymer layer (described in detail in the section A-1-2) is much thinner than an ordinary polarizer, and hence the dimensional change of the hydrophilic polymer layer is extremely small. As a result, the dimensional change rate of the entire polarizing film becomes extremely small. Further, a method of producing the polarizing film described in the section A-1-2 is assumed to act integrally with the foregoing fact to reduce the dimensional change rate.

A-1-1. Base material layer

Any appropriate polymer film can be adopted as the base material layer **11a** as long as the effect of the present invention is obtained. The base material layer is preferably constructed of a polymer film excellent in stretchability, more preferably constructed of a polymer film that can be stretched at a stretching ratio of 5 times or more. Any such film can be stretched well in a state in which a composition for forming the hydrophilic polymer layer is brought into close contact with the film. In addition, the base material layer is preferably constructed of a film having excellent smoothness. The composition for forming the hydrophilic polymer layer can be uniformly applied to such film. In one embodiment, the base material layer is constructed of a polymer film having a positive intrinsic birefringence. When such film is used, the absorption axis of the hydrophilic polymer layer (polarizing thin film) and the slow axis (if expressed) of the base material layer can be made substantially parallel to each other by stretching. In another embodiment, the base material layer is constructed of a polymer film having a negative intrinsic birefringence. When such film is used, the absorption axis of the hydrophilic polymer layer and the slow axis (if expressed) of the base material layer can be made substantially perpendicular to each other by stretching.

Specific examples of any such polymer as described above that constructs the base material layer include a (meth)acrylic resin, an olefin-based resin, a cyclic olefin-based resin (such as a norbornene-based resin), a polyester-based resin, and a polycarbonate-based resin. Of those, a norbornene-based resin and a polyester-based resin are preferred, and a norbornene-based resin is more preferred. The norbornene-based resin and the polyester-based resin can each be used as it is as a protective film for a polarizer because each of the resins not only has good stretchability but also is excellent in transparency, and further, films formed of these resins have low moisture permeabilities. A film formed of the norbornene-based resin is particularly excellent in dimensional stability. The above-mentioned polymers

may be used alone or in combination.

Examples of the above-mentioned (meth)acrylic resin include poly(meth)acrylates such as polymethyl methacrylate, a methyl methacrylate-(meth)acrylic acid copolymer, a methyl methacrylate-(meth)acrylate copolymer, a methyl methacrylate-acrylate-(meth)acrylic acid copolymer, a methyl (meth)acrylate-styrene copolymer (such as an MS resin), polymers each having an alicyclic hydrocarbon group (such as a methyl methacrylate-cyclohexyl methacrylate copolymer, and a methyl methacrylate-norbornyl (meth)acrylate copolymer), a (meth)acrylic resin having a glutaric acid anhydride structure, a (meth)acrylic resin having a lactone ring structure, and a (meth)acrylic resin having a glutarimide structure. Of those, a (meth)acrylic resin having a lactone ring structure is preferred. This is because a film having high heat resistance, high transparency, and a high mechanical strength is obtained.

Examples of the above-mentioned olefin-based resin include a (co) polymer constructed of ethylene or a linear or branched α-olefin having 3 to 20 carbon atoms. Examples of the α-olefin include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 4-methyl-1-pentene, 2-ethyl-1-hexene, and 2,2,4-trimethyl-1-pentene. The olefin-based resin is preferably poly(3-methyl-1-pentene) or poly(4-methyl-1-pentene).

Examples of the above-mentioned norbornene-based resin include ring-opening (co)polymers of norbornene-based monomers, addition polymers of the norbornene-based monomers, copolymers of the norbornene-based monomers and α-olefins such as ethylene and propylene (representatively random copolymers), and graft-modified products obtained by modifying these polymers with unsaturated carboxylic acids or derivatives thereof, and hydrogenated products thereof. Examples of the norbornene-based monomer include: norbornene, alkyl- and/or alkylidene-substituted products thereof such as 5-methyl-2-norbornene, 5-dimethyl-2-norbornene, 5-ethyl-2-norbornene, 5-butyl-2-norbornene, and 5-ethylidene-2-norbornene, and substituted products thereof with a polar group such as a halogen; dicyclopentadiene and 2,3-dihydrodicyclopentadiene; dimethanooctahydronaphthalene, alkyl- and/or alkylidene-substituted products thereof, and substituted products thereof with a polar group such as a halogen, such as 6-methyl-1,4:5,8-dimethano-1,4,4a,5,6,7,8,8a-octahydronaphthal ene, 6-ethyl-1,4:5,8-dimethano-1,4,4a,5,6,7,8,8a-octahydronaphthalene, 6-ethylidene-1,4:5,8-dimethano-1,4,4a,5,6,7,8,8a-octahydronaph thalene, 6-chlora-1,4:5,8-dimethano-1,4,4a,5,6,7,8,8a-octahydronaphthalene, 6-cyano-1,4:5,8-dimethano-1,4,4a,5,6,7,8,8a-octahydronaphthalene, 6-pyridyl-1,4:5,8-dimethano-1,4,4a,5,6,7,8,8a-octahydronaphthalene, and 6-methoxycarbonyl-1,4:5,8-dimethano-1,4,4a,5,6,7,8,8a-octahydronaphthalene; a trimer and a tetramer of cyclopentadiene such as 4,9:5,8-dimethano-3a,4,4a,5,8,8a,9,9a-octahydro-1H-benzoindene and 4,11:5,10:6,9-trimethano-3a,4,4a,5,5a,6,9,9a,10,10a,11,11a-dod ecahydro-1H-cyclopentaanthracene.

Examples of the above-mentioned polyester-based resin include polyethylene terephthalate (PET), polyarylate (PAR), polyethylene naphthalate (PEN), polybutylene terephthalate (PBT), modified products and copolymers thereof, and mixed products (polymer alloys) thereof with other resins. Of those, amorphous PET and mixed products such as PET/PC and PAR/PC are preferred.

An aromatic polycarbonate is preferably used as the above-mentioned polycarbonate-based resin. Representative examples of the aromatic polycarbonate include those obtained by reacting carbonate precursor substances with aromatic diphenol compounds. Specific examples of the carbonate precursor substance include phosgene, diphenol bischloroformate, diphenylcarbonate, di-p-tolylcarbonate, phenyl-p-tolylcarbonate, di-p-chlorophenylcarbonate, and dinaphthylcarbonate. Of those, phosgene and diphenylcarbonate are preferred. Specific examples of the aromatic diphenol compound include 2,2-bis(4-hydroxyphenyl)propane, 2,2-bis(4-hydroxy-3,5-dimethylphenyl)propane, bis(4-hydroxyphenyl)methane, 1,1-bis-(4-hydroxyphenyl)ethane, 2,2-bis(4-hydroxyphenyl)butane, 2,2-bis(4-hydroxy-3,5-dimethylphenyl)butane, 2,2-bis(4-hydroxy-3,5-dipropylphenyl)propane, 1,1-bis(4-hydroxyphenyl)cyclohexane, and 1,1-bis(4-hydroxyphenyl)-3,3,5-trimethylcyclohexane. They may be used alone or in combination. Preferably, 2,2-bis(4-hydroxyphenyl)propane, 1,1-bis(4-hydroxyphenyl)cyclohexane, and 1,1-bis(4-hydroxyphenyl)-3,3,5-trimethylcyclohexane are used. Particularly preferably, 2,2-bis(4-hydroxyphenyl)propane and 1,1-bis(4-hydroxyphenyl)-3,3,5-trimethylcyclohexane are used in combination.

The thickness of the above-mentioned base material layer before stretching is preferably 50 μm to 200 μm, more preferably 100 μm to 200 μm. The thickness of the base material layer after the stretching (that is, the thickness of the base material layer in the polarizing film) is preferably 20 μm to 80 μm, more preferably 30 μm to 60 μm.

A-1-2. Hydrophilic polymer layer

The hydrophilic polymer layer **11b** can function as a polarizer. The hydrophilic polymer layer **11b** is obtained by applying a composition containing a vinyl alcohol-based resin (which may hereinafter be referred to as "vinyl alcohol composition") to a base material (eventually serving as the base material layer) to form a thin film, stretching the thin film together with the base material, and dyeing the stretched thin film (substantially a polarizing film in which the base material layer and the hydrophilic polymer layer are integrated with each other is obtained).

Examples of the vinyl alcohol-based resin include polyvinyl alcohol and an ethylene-vinyl alcohol copolymer.

The polyvinyl alcohol is obtained by saponifying polyvinyl acetate. The ethylene-vinyl alcohol copolymer is obtained by saponifying an ethylene-vinyl acetate copolymer. The above-mentioned vinyl alcohol-based resin has a degree of saponification of preferably 95.0 mol% to 99.95 mol%, more preferably 99.0 mol% to 99.93 mol%. The above-mentioned degree of saponification can be determined in conformity with JIS K 6726-1994. The use of a vinyl alcohol-based resin having a degree of saponification within the abate-mentioned range can provide a polarizer excellent in durability.

The average polymerization degree of the above-mentioned vinyl alcohol-based resin can be appropriately selected depending on purposes. The above-mentioned average polymerization degree is preferably 1,200 to 4,500, more preferably 1, 600 to 4,300. It should be noted that the average polymerization degree can be determined in conformity with JIS K 6726-1994.

The above-mentioned vinyl alcohol composition is typically a solution prepared by dissolving the vinyl alcohol-based resin in an appropriate solvent. Representative examples of the solvent include water, warm water, and hot water. The concentration of the vinyl alcohol-based resin in the solution is 3 wt% to 20 wt%. Such resin concentration enables the formation of a uniform coating film in close contact with the base material.

The above-mentioned vinyl alcohol composition preferably contains a plasticizer and/or a surfactant. Examples of the above-mentioned plasticizer include polyhydric alcohols such as ethylene glycol and glycerin. The above-mentioned surfactant is, for example, a nonionic surfactant. The plasticizer and the surfactant described above are used for the purpose of additionally improving the dyeing property and stretchability of a thin film to be obtained. The above-mentioned vinyl alcohol composition can further contain any appropriate additive depending on purposes.

Any appropriate method can be adopted as a method of applying the above-mentioned vinyl alcohol composition. Specific examples of the method include a roll coating method, a spin coating method, a wire bar coating method, a dip coating method, an extrusion method, a curtain coating method, and a spray coating method. According to the present invention, the base material and the thin film can be laminated in a close fashion merely by applying the vinyl alcohol composition without through any adhesive layer or pressure-sensitive adhesive layer. As a result, the dimensional change rate of a polarizing film to be obtained can be reduced. The vinyl alcohol composition may be undercoated before the application.

Drying the applied vinyl alcohol composition described above results in the formation of the thin film. The drying may be air-drying, may be heat drying, or may be a combination thereof. The thickness of the thin film after the drying and before stretching is preferably 2 $\mu$m to 50 $\mu$m.

Next, the base material and the thin filmdescribed above are stretched together. Stretching the base material and the thin film together reduces the internal stress of a polarizing film to be obtained, and hence a polarizing film having a small dimensional change rate is obtained. Any appropriate stretching method can be adopted as a method of stretching the base material and the thin film described above. Specific examples of the method include a longitudinal uniaxial stretching method, a lateral uniaxial stretching method, a longitudinal and lateral simultaneous biaxial stretching method, and a longitudinal and lateral sequential biaxial stretching method. Any appropriate stretching machine such as a roll stretching machine, a tenter stretching machine, or a biaxial stretching machine can be used as stretching means. A stretching ratio and a stretching temperature can be appropriately set depending on optical properties demanded of a hydrophilic polymer layer to be obtained. The stretching ratio is preferably 3 to 7 times, and the stretching temperature is preferably the glass transition temperature of the base material$\pm$20°C, or 100°C to 180°C. In one embodiment, a stretching direction is the short direction of each of the elongated base material and thin film. The stretching in the short direction can provide a polarizing film which: can express its absorption axis in the short direction; and can be suitably applied to a wide, large-screen liquid crystal display apparatus.

The stretched base material and thin film described above are subjected to a dyeing treatment, and as required, a swelling treatment, a cross-linking treatment, a water washing treatment, and a drying treatment (treatment for regulating a moisture content). Thus, a polarizing film having a construction "base material layer/hydrophilic polymer layer" is obtained. Performing the dyeing after the stretching reduces the internal stress of a polarizing film to be obtained, and hence a polarizing film having a small dimensional change rate is obtained. The dyeing treatment is representatively wet dyeing involving immersion in a dyeing bath containing a dichromatic substance (representatively iodine or a dichromatic dye). The total time period for which the base material and the thin film are immersed in the dyeing bath is preferably 5 seconds to 240 seconds. Such immersion time enables one to dye only the thin film without having any influence on the base material. The dyeing treatment causes the thin film (eventually the hydrophilic polymer layer) to adsorb the dichromatic substance. In one embodiment, the stretched base material and thin film described above are subjected to dry stretching at a high temperature (e.g., 130°C to 180°C) before being subjected to the wet dyeing. The adoption of such procedure can additionally reduce the internal stress of a polarizing film to be obtained, and hence a polarizing film having an extremely small dimensional change rate can be obtained. Detailed description of the swelling treatment, the cross-linking treatment, the water washing treatment, and the drying treatment is omitted because conditions typically performed in the industry are adopted for these treatments.

The resultant hydrophilic polymer layer has a thickness of preferably 1 $\mu$m to 10 $\mu$m, more preferably 1 $\mu$m to 6 $\mu$m, particularly preferably 1 $\mu$m to 4 $\mu$m. The hydrophilic polymer layer used in the present invention itself shows an

extremely small dimensional change because the hydrophilic polymer layer is much thinner than an ordinary polarizer (polarizer obtained by stretching and dyeing a vinyl alcohol-based film: representative thickness; about 10 μm to 25 μm). Further, as described in the foregoing, according to the method of producing the polarizing film employed in the present invention, each of (1) the direct lamination of the base material and the thin film in a close fashion, (2) the collective stretching of the base material and the thin film, and (3) the dyeing after the stretching is assumed to contribute to a reduction in the dimensional change rate of a polarizing film to be obtained. The fact that the dimensional change of the hydrophilic polymer layer itself is extremely small and the reduction in the dimensional change rate resulting from the production method are assumed to act integrally with each other to make the dimensional change rate of the entire polarizing film extremely small.

The transmittance (also referred to as "single axis transmittance") of the above-mentioned hydrophilic polymer layer (polarizing thin film) at a wavelength of 550 nm measured at 23°C is preferably 39% to 46%, more preferably 42% to 46%.

The above-mentioned hydrophilic polymer layer (polarizing thin film) preferably has a polarization degree of 99.0% or more. It should be noted that a theoretical upper limit for the polarization degree is 100%. Setting the single axis transmittance and the polarization degree within the above-mentioned ranges can provide a liquid crystal display apparatus showing a small light leakage in a front direction (eventually having a high contrast).

The hue a value (single a value) of the above-mentioned hydrophilic polymer layer (polarizing thin film) according to the National Bureau of Standards (NBS) is preferably -2.0 or more, more preferably -1.8 or more. It should be noted that an ideal value for the above-mentioned a value is 0. In addition, the hue b value (single b value) of the above-mentioned hydrophilic polymer layer according to the National Bureau of Standards (NBS) is preferably 4.2 or less, more preferably 4.0 or less. It should be noted that an ideal value for the above-mentioned b value is 0. Setting each of the a value and b value of the hydrophilic polymer layer to a value close to 0 can provide a liquid crystal display apparatus that displays an image with vivid colors. The fact that a polarizing thin film (hydrophilic polymer layer), eventually a polarizing film, much thinner than a conventional polarizer (accordingly having a small dimensional change rate) and having such practically acceptable optical properties as described above was actually produced is one major result in the present invention.

A-2. Retardation film

As described above, the retardation film **12** has a slow axis in its lengthwise direction. Any appropriate retardation film can be adopted as the retardation film **12** depending on purposes as long as the film has a slow axis in its lengthwise direction and can be laminated with the above-mentioned polarizing film **11.** Hereinafter, representative examples of the retardation film used in the present invention are described.

A-2-1. Retardation film whose refractive index ellipsoid shows relationship of nx>ny=nz or nx>ny>nz

In one embodiment, the refractive index ellipsoid of the retardation film **12** shows a relationship of nx>ny=nz or nx>ny>nz. Here, nx represents a refractive index in the direction (slow axis direction) in which the refractive index becomes a maximum in a film plane, ny represents a refractive index in the direction (fast axis direction) perpendicular to the slow axis direction in the film plane, and nz represents a refractive index in the thickness direction of the film.

In one embodiment, the refractive index ellipsoid of the retardation film **12** shows a relationship of nx>ny=nz. The term "ny=nz" as used herein includes not only a case where ny and nz are strictly equal to each other but also a case where ny and nz are substantially equal to each other. More specifically, the term "ny=nz" means that an Nz coefficient (=Rth/Re) is more than 0.9 and less than 1.1. The in-plane retardation value at a wavelength of 590 nm (Re [590]) of the retardation film whose refractive index ellipsoid shows a relationship of nx>ny=nz can be set to any appropriate value depending on purposes. In one embodiment, the Re[590] of the retardation film is preferably 20 nm to 150 nm, more preferably 30 nm to 130 nm, particularly preferably 40 nm to 120 nm. When the in-plane retardation value is set to fall within the above-mentioned range, additionally appropriate optical compensation for a liquid crystal cell is performed, and hence a liquid crystal display apparatus having a high contrast ratio in an oblique direction can be obtained. It should be noted that the term "in-plane retardation value (Re[λ])" as used herein refers to an in-plane retardation value at a wavelength of λ (nm) and 23°C. When the thickness of the film is represented by d (nm), the Re[λ] can be determined from the equation Re[λ] = (nx-ny)×d. The thickness direction retardation value at a wavelength of 590 nm (Rth[590]) of the retardation film whose refractive index ellipsoid shows a relationship of nx>ny=nz can also be set to any appropriate value depending on purposes. It should be noted that the term "thickness direction retardation value (Rth[λ])" as used herein refers to a thickness direction retardation value at a wavelength of λ (nm) and 23°C. When the thickness of the film is represented by d (nm), the Rth[λ] can be determined from the equation Rth[λ]=(nx-nz)×d. Therefore, the in-plane retardation Re and the thickness direction retardation Rth are substantially equal to each other in the retardation film whose refractive index ellipsoid shows a relationship of nx>ny=nz.

The thickness of the above-mentioned retardation film can be appropriately set depending on purposes, and desired in-plane retardation and desired thickness direction retardation. In one embodiment, the thickness of the retardation film is preferably 20 to 150 μm.

The above-mentioned retardation film can be formed by subjecting a polymer film to a stretching treatment. Specifically, a retardation film having desired optical properties (such as a refractive index ellipsoid, an in-plane retardation, and a thickness direction retardation) can be obtained by appropriately selecting the kind of a polymer, stretching conditions (such as a stretching temperature, a stretching ratio, and a stretching direction), a stretching method, and the like. In one embodiment, the stretching temperature is preferably 110 to 170°C and the stretching ratio is preferably 1.10 to 1.67 times. The stretching method is, for example, longitudinal uniaxial stretching. The employment of any such stretching method can provide an elongated retardation film having a slow axis in its lengthwise direction.

Any appropriate resin can be adopted as a resin for forming the above-mentioned polymer film. Specific examples thereof include resins each having a positive intrinsic birefringence such as a norbornene-based resin, a polycarbonate-based resin, a cellulose-based resin, a polyvinyl alcohol-based resin, and a polysulfone-based resin. Of those, a norbornene-based resin, a polycarbonate-based resin, and a cellulose-based resin are preferred, and a norbornene-based resin is particularly preferred. Details about the norbornene-based resin and the polycarbonate-based resin are as described in the above-mentioned section A-1-1.

Any appropriate cellulose-based resin (representatively an ester of cellulose and an acid) can be adopted as the above-mentioned cellulose-based resin. Preferably, the cellulose-based resin is substituted by an acetyl group and a propionyl group. The lower limit of the substitution degree of the cellulose-based resin "acetyl substitution degree (DSac)+propionyl substitution degree (DSpr)" (showing how much three hydroxyl groups present in a repetition unit of cellulose are substituted, on average, by an acetyl group or a propionyl group) is preferably 2 or more, more preferably 2.3 or more, still more preferably 2.6 or more. The upper limit of "DSac+DSpr" is preferably 3 or less, more preferably 2.9 or less, still more preferably 2.8 or less. Setting the substitution degree of the cellulose-based resin in the above-mentioned range can provide a retardation film having a desired refractive index profile.

The lower limit of the above-mentioned propionyl substitution degree (DSpr) is preferably 1 or more, more preferably 2 or more, still more preferably 2.5 or more. The upper limit of the DSpr is preferably 3 or less, more preferably 2. 9 or less, still more preferably 2. 8 or less. Setting the DSpr in the above-mentioned range can enhance the solubility of the cellulose-based resin in a solvent and easily control the thickness of a retardation film to be obtained. Further, setting "DSac+DSpr" in the above-mentioned range and setting the DSpr in the above-mentioned range can provide a retardation film having desired optical properties and having reverse wavelength dispersion dependency.

The above-mentioned acetyl substitution degree (DSac) and propionyl substitution degree (DSpr) can be determined by a method described in paragraphs [0016] to [0019] in JP 2003-315538 A. Any appropriate method can be adopted as a method of substituting the resin by the acetyl group and propionyl group. For example, cellulose may be treated with a strong caustic soda solution to prepare alkali cellulose, and the alkali cellulose and a predetermined amount of a mixture of acetic anhydride and propionic anhydride are mixed for acylation. An acyl group is partially hydrolyzed to adjust the substitution degree "DSac+DSpr".

The above-mentioned cellulose-based resin can have any other substituent except an acetyl group and a propionyl group. Examples of the other substituent include: ester groups such as a butyrate; and ether groups such as an alkyl ether group and an aralkylene ether group.

In another embodiment, the refractive index ellipsoid of the retardation film **12** shows a relationship of nx>ny>nz. In this case, an Nz coefficient is preferably 1.1 to 3. 0, more preferably 1.1 to 2.0. The in-plane retardation value at a wavelength of 590 nm (Re [590]) of the retardation film whose refractive index ellipsoid shows a relationship of nx>ny>nz can be set to any appropriate value depending on purposes. In one embodiment, the Re[590] of the retardation film is preferably 20 nm to 150 nm, more preferably 30 nm to 130 nm, particularlypreferably 40 nmto 120 nm. The thickness direction retardation value at a wavelength of 590 nm (Rth[590]) of the retardation film whose refractive index ellipsoid shows a relationship of nx>ny>nz can also be set to any appropriate value depending on purposes. In one embodiment, the Rth[590] of the above-mentioned retardation film is preferably 22 nm to 300 nm, more preferably 40 nm to 200 nm, particularly preferably 50 nm to 150 nm. When the in-plane retardation value and the thickness direction retardation value are set to fall within the above-mentioned ranges, additionally appropriate optical compensation for a liquid crystal cell is performed, and hence a liquid crystal display apparatus having a high contrast ratio in an oblique direction can be obtained.

In one embodiment, the retardation film whose refractive index ellipsoid shows a relationship of nx>ny>nz can be formed by subjecting a polymer film to a stretching treatment. A retardation film having desired optical properties (such as a refractive index ellipsoid, an in-plane retardation, and a thickness direction retardation) can be obtained by appropriately selecting the kind of a polymer, stretching conditions (such as a stretching temperature, a stretching ratio, and a stretching direction), a stretching method, and the like. A material for the polymer film and the stretching conditions are as described above for the retardation film whose refractive index ellipsoid shows a relationship of nx>ny=nz. The stretching method is, for example, fixed-end biaxial stretching or sequential biaxial stretching.

In another embodiment, the above-mentioned retardation film can be formed by applying a solution of a non-liquid crystal polymer and removing the solvent. In the method, a treatment (such as a stretching treatment) for imparting optical biaxiality (nx>ny>nz) is preferably performed. Examples of the above-mentioned non-liquid crystal polymer include polyamide, polyimide, polyester, polyetherketone, polyamideimide, and polyesterimide. Of those, polyimide is preferred. It should be noted that specific examples of the above-mentioned polyimide and details about a method of forming the retardation film are described in JP 2004-46065 A. When the retardation film is a coating film, its thickness is representatively 0.1 to 10 μm, more preferably 0.1 to 8 μm, particularly preferably 0.1 to 5 μm.

A-2-2. Retardation film containing tilt-aligned molecules (tilt alignment film)

The above-mentioned retardation film **12** may be the so-called O plate containing tilt-aligned molecules. The tilt-aligned molecules can compensate the birefringence of the entire liquid crystal molecules in a liquid crystal cell as a whole. The tilt-aligned molecules can suitably compensate the birefringence of a liquid crystal molecule at the interface of the liquid crystal cell with a substrate out of the entire molecules. The term "O plate" as used herein comprehends not only a state in which molecules are tilt-aligned at a constant angle but also hybrid alignment. The term "hybrid alignment" refers to such a state that the tilt angles of molecules increase or decrease continuously or intermittently along a thickness direction, and a tilt angle ($\theta_A$) on a polarizing film side is different from a tilt angle ($\theta_B$) on the opposite side (the side of an interface with air in a shown example). Here, a tilt angle ($\theta$) represents an angle formed between an adjacent layer surface and each of molecules, and is set to 0° when the molecules are arranged so as to be parallel to a plane. FIG. **2(a**) schematically shows a representative state in which molecules are arranged in the tilt alignment, and FIG. **2(b)** schematically shows a representative state in which molecules are arranged in the hybrid alignment. In each of FIG. **2(a)** and FIG. **2(b),** the upper side is the polarizing film side.

It should be noted that as shown in the following equations (I) and (II), the tilt angle can be determined by substituting ne, no, and a retardation value (each of the values measured at polar angles of -40° to +40° (a normal direction is set to 0°) in a direction parallel to a slow axis in an increment of 5 °) measured in advance into Witte's equation described in Journal of Applied Physics, Vol. 38 (1999), P. 748. Here, $\theta_{air}$ represents the tilt angle of a tilt-aligned molecule on one side (such as an interface with air), $\theta_{AL}$ represents the tilt angle thereof on the other side (such as an interface with a base material or an alignment film), d represents the thickness of a retardation film containing the tilt-aligned molecule, ne represents the extraordinary light refractive index of the molecule, and no represents the ordinary light refractive index of the molecule.

[Math. 1]

$$R = \frac{d \cdot (n_e - n_o)}{\cos\alpha} \cdot \left[ \frac{1}{2} + \frac{1}{4} \cdot \frac{\sin(2\Theta_{air} - 2\alpha) - \sin(2\Theta_{AL} - 2\alpha)}{\Theta_{air} - \Theta_{AL}} \right] \quad \cdots \text{(I)}$$

$$\alpha = \arcsin\left( \frac{\sin\phi}{n_o} \right) \quad \cdots \text{(II)}$$

When the retardation film **12** adopts simple tilt alignment, its average tilt angle is preferably 10° to 40° in one embodiment. When the average tilt angle is set to fall within the above-mentioned range, additionally appropriate optical compensation for a liquid crystal cel is performed, and hence a liquid crystal display apparatus having a high contrast ratio in an oblique direction can be obtained. The term "average tilt angle" as used herein refers to the average angle of the tilt alignment of the entire molecules in a statistical sense.

When the retardation film **12** adopts the hybrid alignment, the tilt angle ($\theta_A$) on the polarizing film side (hydrophilic polymer layer side) is preferably larger than the tilt angle ($\theta_B$) on the opposite side as shown in FIG. **2(b).** In one embodiment, a difference ($\Delta\theta=\theta_A-\theta_B$) between the tilt angle ($\theta_A$) on the polarizing film side (hydrophilic polymer layer side) and the tilt angle ($\theta_B$) on the opposite side is preferably 1° to 40°, more preferably 1° to 10°, the above-mentioned tilt angle ($\theta_A$) on the polarizing film side is preferably 20° to 90°, more preferably 25° to 35°, and the above-mentioned tilt angle ($\theta_B$) on the opposite side is preferably 19° to 50°, particularly preferably 24° to 34°. Inanother embodiment, the

$\Delta\theta$ is preferably 20° to 70°, more preferably 40° to 65°, the $\theta_A$ is preferably 20° to 90°, more preferably 40° to 85°, and the $\theta_B$ is preferably 0° to 20°, more preferably 0° to 10°, particularly preferably 0° to 5°.

A-2-2-1. Tilt alignment film whose constituent molecules each show refractive index ellipsoid of nx>ny≥nz

In one embodiment, a direction obtained by projecting the direction of the tilt alignment of a molecule in the plane of the retardation film **12** is substantially parallel to the slow axis of the retardation film. In such retardation film, a molecule that constructs the film shows a refractive index ellipsoid of nx>ny≥nz, and the molecule is tilt-aligned. Such retardation film can be obtained by, for example, subjecting a retardation film showing a refractive index ellipsoid of nx>ny≥nz to a tilt alignment treatment (a method for the tilt alignment is described later). In one embodiment, the refractive index ratio of a molecule that constructs the retardation film **12** is preferably 0.9 to 4. The refractive index ratio of a molecule is a parameter related to the shape of the molecule, and is represented by the following equation: (nx-nz)/(nx-ny). When the term "refractive index ellipsoid of a molecule" or "refractive index ratio of a molecule" is used herein, nx represents a refractive index in the major axis direction of the molecule, ny represents a refractive index in the direction perpendicular to the major axis direction (nx direction) of the molecule in a plane including the major axis of the molecule, and nz represents a refractive index in the direction perpendicular to both the nx direction and the ny direction. When the term "refractive index ellipsoid of a retardation film" is used and the optical properties (such as in-plane retardation) of the film are represented, nx represents a refractive index in the direction (slow axis direction) in which the refractive index becomes a maximum in a film plane, ny represents a refractive index in the direction (fast axis direction) perpendicular to the slow axis direction in the film plane, and nz represents a refractive index in the thickness direction of the film. Needless to say, the refractive index in the major axis direction (nx direction) of a molecule when the term "refractive index ellipsoid of the molecule" or "refractive index ratio of the molecule" is used is the statistical average of the entire molecules that construct the film. The refractive index ellipsoid of a molecule and the refractive index ratio of the molecule can be calculated from the in-plane retardation value, thickness direction retardation value, and average tilt angle of the tilt alignment film.

The in-plane retardation value at a wavelength of 590 nm (Re[590]) of the above-mentioned retardation film can be set to any appropriate value depending on purposes. In one embodiment, the Re[590] of the above-mentioned retardation film is preferably 20 nm to 150 nm, more preferably 30 nm to 130 nm, particularly preferably 40 nm to 120 nm. When the in-plane retardation value is set to fall within the above-mentioned range, additionally appropriate optical compensation for a liquid crystal cell is performed, and hence a liquid crystal display apparatus having a high contrast ratio in an oblique direction can be obtained.

The thickness direction retardation value at a wavelength of 590 nm (Rth[590]) of the above-mentioned retardation film can be set to any appropriate value depending on purposes. In one embodiment, the Rth[590] of the above-mentioned retardation film is preferably 45 nm to 800 nm, more preferably 60 nm to 720 nm, particularly preferably 80 nm to 640 nm. When the thickness direction retardation value is set to fall within the above-mentioned range, additionally appropriate optical compensation for a liquid crystal cell is performed, and hence a liquid crystal display apparatus having a high contrast ratio in an oblique direction can be obtained.

As described above, the refractive index ratio of a molecule that constructs the retardation film **12** is preferably 0.9 to 4, more preferably 2 to 3.5. As long as the refractive index ratio falls within such range, optical compensation for each liquid crystal molecule of a liquid crystal cell can be appropriately performed, and hence a liquid crystal display apparatus having a high contrast in an oblique direction can be obtained.

Any appropriate compound capable of forming a film which shows a refractive index ellipsoid of nx>ny≥nz before a tilt alignment treatment and which can be subjected to a tilt alignment treatment to be described later can be adopted as a material that constructs the above-mentioned retardation film. Such material is a thermoplastic resin in one embodiment, or is a liquid crystal compound in another embodiment. Specific examples of the thermoplastic resin include a norbornene-based resin, a polycarbonate-based resin, a cellulose-based resin, a polyvinyl alcohol-based resin, and a polysulfone-based resin. Of those, a norbornene-based resin is preferred. Details about the norbornene-based resin are as described in the above-mentioned section A-1-1. In addition, the thermoplastic resin may be a resin having a positive intrinsic birefringence, or may be a resin having a negative intrinsic birefringence.

When the retardation film is constructed of a thermoplastic resin, the retardation film can be obtained by applying different shearing forces to the respective surfaces of a polymer film formed of the thermoplastic resin. The polymer film is preferably a retardation film, more preferably a retardation film showing a refractive index ellipsoid of nx>ny≥nz. A method of applying different shearing forces to the respective surfaces of the film is, for example, to roll the film with a pair of rolls made of different materials (such as a pair of rolls having different coefficients of friction), to roll the film with a pair of rolls having different diameters, or to roll the film with a pair of rolls having different rotational speeds. Those methods may be combined. For example, a retardation film tilt-aligned so that the downstream side of the flow direction of the film may be directed upward can be obtained by making the rotational speed of a lower roll higher than that of an upper roll. In one embodiment, the rolling can be performed under heating (preferably heating at a temperature in the

vicinity of the Tg of the polymer film). An average tilt angle and a tilt direction can be controlled by appropriately setting, for example, a difference in coefficient of friction between the rolls, a ratio between the diameters of the rolls, a ratio between the rotational speeds of the rolls, the nip pressure of the rolls, a heating temperature, and the kind of the resin that constructs the polymer film. For example, when an unstretched norbornene-based resin film is used, and the heating temperature of the rolls and a rotational speed ratio of the lower roll to the upper roll are set to 120°C and 1.1, respectively, the following retardation film can be obtained. The film has a slow axis in its lengthwise direction, the refractive index ratio of a molecule that constructs the film is 3, and the film is tilt-aligned at an average tilt angle of 30° so that the downstream side of the flow direction of the film may be directed upward. It should be noted that the refractive index ratio of a molecule that constructs the film before a tilt alignment treatment and that after the treatment are different from each other. That is, the tilt alignment treatment does not merely tilt each resin molecule that constructs the polymer film, but instead subjects the resin molecule to stretching as well as the tilt alignment to change the shape itself of the molecule. The refractive index ratio of a molecule that constructs the retardation film **12** does not change before and after the tilt alignment as long as the molecule is merely tilted in the tilt alignment treatment. However, a change in the shape of themoleculemayresult in different values for the refractive index ratios of the molecule before and after the tilt alignment treatment. For example, in the case of such treatment conditions as described above of a heating temperature of the rolls of 120°C and a rotational speed ratio of the lower roll to the upper roll of 1.1, when a tilt-aligned retardation film having a refractive index ratio of a molecule of 3 is to be obtained, the refractive index ratio of a molecule that constructs a polymer film to be used can be 1 to 1.35, and the Nz coefficient of the polymer film can be 1 to 1.35. It should be noted that when the retardation film is constructed of a thermoplastic resin, the thickness of the retardation film is appropriately set depending on purposes, and desired in-plane retardation and desired thickness direction retardation, and is preferably 60 to 150 μm.

When the retardation film is constructed of a liquid crystal compound, the liquid crystal compound can be a rod-shaped liquid crystal compound. In this case, the refractive index ellipsoid of a molecule representatively shows a relationship of nx>ny=nz. Here, the term "ny=nz" comprehends not only the case where ny and nz are strictly equal to each other but also the case where ny and nz are substantially equal to each other. Specifically, ny-nz can be more than -0. 005 and less than 0.005, and is preferably more than -0.001 and less than 0.001. It should be noted that the refractive index ellipsoid of the entire retardation film may not have a relationship of nx>ny=nz because a molecule showing the above-mentioned relationship of the refractive index ellipsoid is tilt-aligned in the retardation film.

The term "rod-shaped liquid crystal compound" as used herein refers to the following compound. The compound has a mesogenic group in its molecular structure, the refractive index of the mesogenic group in its major axis direction is larger than that in its minor axis direction, and the compound shows a liquid crystal phase by virtue of a temperature change such as heating or cooling, or the action of a certain amount of a solvent. Any appropriate compound can be selected as the rod-shaped liquid crystal compound. It is preferred that the rod-shaped liquid crystal compound show a crystalline or glass state at room temperature and express a nematic liquid crystal phase at a high temperature. The rod-shaped liquid crystal compound may be as described below. The compound shows a liquid crystal phase before being formed into a film, but after having been formed into a film, the compound forms a network structure as a result of, for example, a cross-linking reaction so that the compound may no longer show any liquid crystal phase. When a rod-shaped liquid crystal compound having such nature as described above is used, a hybrid arrangement is formed in, for example, a state in which the compound shows a liquid crystal phase, and then the arrangement state can be fixed by cooling or cross-linking.

The above-mentioned mesogenic group is a structural portion needed for forming a liquid crystal phase, and typically contains a cyclic unit. Specific examples of the above-mentioned mesogenic group include a biphenyl group, a phenylbenzoate group, a phenylcyclohexane group, an azoxybenzene group, an azomethine group, an azobenzene group, a phenylpyrimidine group, a diphenylacetylene group, a diphenylbenzoate group, a bicyclohexane group, a cyclohexylbenzene group, and a terphenyl group. It should be noted that a terminal of each of those ring units may have a substituent such as a cyano group, an alkyl group, an alkoxy group, or a halogen group. Of those, one having a biphenyl group or a phenylbenzoate group is preferably used as the mesogenic group formed of a ring unit and the like.

The above-mentioned rod-shaped liquid crystal compound preferably has at least one cross-linkable functional group in part of its molecular structure. This is because its mechanical strength is increased by a cross-linking reaction, and hence a retardation layer excellent in durability is obtained. Examples of the above-mentioned cross-linkable functional group include an acryloyl group, a methacryloyl group, an epoxy group, and a vinyl ether group. A commercially available product can also be used as it is as the above-mentioned rod-shaped liquid crystal compound. Alternatively, a product obtained by adding, to a commercially available or synthesized rod-shaped liquid crystal compound, any other liquid crystal compound, or any appropriate additive such as a polymerization initiator or a leveling agent can be used as a liquid crystalline composition. A commercially available, rod-shaped liquid crystal compound having a cross-linkable functional group is, for example, a product available under the trade name "Paliocolor LC242" from BASF or a product available under the trade name "CB483" from HUNTSMAN.

When the retardation film is constructed of a liquid crystal compound, the retardation film can be obtained by:

tilt-aligning a rod-shaped liquid crystal compound; and solidifying or curing the resultant while fixing the alignment state. Specifically, the retardation film can be formed by: applying a liquid crystalline composition containing the rod-shaped liquid crystal compound onto the surface subjected to an alignment treatment of an elongated alignment base material to form an application layer; drying the application layer to form a tilt-aligned liquid crystal solidified layer; and irradiating the liquid crystal solidified layer with UV light to form a tilt-aligned liquid crystal cured layer. That is, the retardation film can be a liquid crystal cured layer. In this case, the shape of a liquid crystal molecule does not change before and after the tilt alignment treatment, and hence the refractive index ratio of the molecule does not change before and after the tilt alignment treatment either. It should be noted that the term "solidified layer" as used herein refers to such a layer that the liquid crystalline composition in a softened, molten, or solution state is brought into a solidified state by cooling, and the term "cured layer" as used herein refers to such a layer that part or the entirety of the liquid crystalline composition is cross-linked by heat, a catalyst, light, and/or radiation so as to be brought into an insoluble, unmeltable state or a hardly soluble, hardly meltable state.

Any appropriate base material can be adopted as the alignment base material as long as the liquid crystalline composition can be spread on the base material. The alignment base material is preferably a polymer base material. The alignment base material may be a single layer, or may be a laminate formed of a plurality of layers (such as a laminate of a base material and an alignment film).

The surface of the above-mentioned base material is subjected to any appropriate alignment treatment. Specific examples of the alignment treatment include a mechanical alignment treatment, a physical alignment treatment, and a chemical alignment treatment. Specific examples of the mechanical alignment treatment include a rubbing treatment and a stretching treatment. Specific examples of the physical alignment treatment include a magnetic field alignment treatment and an electric field alignment treatment. Specific examples of the chemical alignment treatment include an oblique deposition method and an optical alignment treatment. Of those, a rubbing treatment is preferred. It should be noted that any appropriate conditions can be adopted as treatment conditions for various alignment treatments depending on purposes.

The above-mentioned liquid crystalline composition can further contain a polymer liquid crystal compound (liquid crystal polymer). The polymer liquid crystal compound is used for the purpose of improving the alignment property of the rod-shaped liquid crystal compound. The content of the above-mentioned polymer liquid crystal compound is preferably 10 parts by weight to 40 parts by weight, more preferably 15 parts by weight to 30 parts by weight with respect to 100 parts by weight of the total solid content in the liquid crystalline composition. The above-mentioned polymer liquid crystal compound is, for example, a compound represented by the following general formula (III).

[Chem. 1]

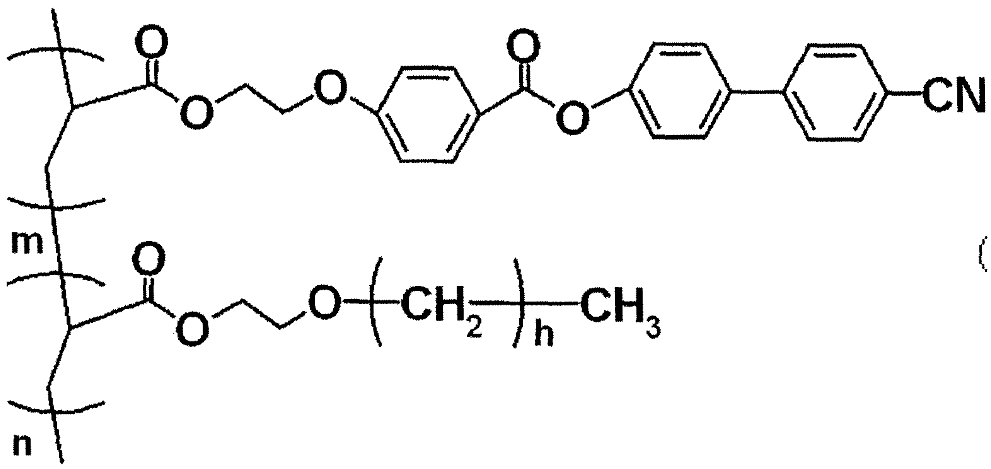

(III)

(In the formula, h represents an integer of 14 to 20, and when the sum of m and n is set to 100, m represents 50 to 70 and n represents 30 to 50.)

The application of the liquid crystalline composition onto the above-mentioned alignment base material by any appropriate method results in the formation of the application layer. The thickness of the application layer is preferably 1 μm to 50 μm, more preferably 1 μm to 30 μm.

Drying the above-mentioned application layer results in the formation of the liquid crystal solidified layer. A

drying time is preferably 20 seconds to 20 minutes, more preferably 1 minute to 10 minutes, particularly preferably 1 minute to 5 minutes. A drying temperature is preferably 30°C or more and equal to or less than a liquid crystal phase-isotropic phase transition temperature (Ti), more preferably 30°C to 120°C. It should be noted that the liquid crystal phase-isotropic phase transition temperature (Ti) can be known by observing a sample of the liquid crystalline composition containing the liquid crystal compound with a polarization microscope while heating the sample.

Irradiating the above-mentioned liquid crystal solidified layer with UV light results in the formation of the tilt-aligned liquid crystal cured layer. The dose of UV light at a wavelength of 365 nm is preferably 400 $mJ/cm^2$ to 1,500 $mJ/cm^2$. The thickness of the liquid crystal cured layer is appropriately set depending on purposes, and desired in-plane retardation and desired thickness direction retardation, and is preferably 1 $\mu$m to 5 $\mu$m, more preferably 1 $\mu$m to 3 $\mu$m, The liquid crystal cured layer is such that the liquid crystal compound is tilt-aligned, preferably such that the compound is aligned so as to have a hybrid arrangement.

A-2-2-2. Tilt alignment film whose constituent molecules each show refractive index ellipsoid of nx=ny>nz

In another embodiment, a direction obtained by projecting the direction of the tilt alignment of a molecule in the plane of the retardation film 12 is substantially perpendicular to the slow axis of the retardation film. That is, the tilt alignment direction of a tilt-aligned molecule is the short direction of the retardation film. In such retardation film, a molecule that constructs the film shows a refractive index ellipsoid of nx=ny>nz, and the molecule is tilt-aligned. The term "nx=ny" as used herein comprehends not only the case where nx and ny are strictly equal to each other but also the case where nx and ny are substantially equal to each other. Specifically, nx-ny can be less than 0.005, and is preferably less than 0.001. A molecule having such relationship of the refractive index ellipsoid is tilt-aligned so as to be in a mirror symmetry state with a positive, uniaxial liquid crystal molecule in a liquid crystal cell at the time of black display, and hence optical compensation in all azimuths can be performed and viewing angle property can be improved. It should be noted that the refractive index ellipsoid of the above-mentioned retardation film may not satisfy a relationship of nx=ny>nz because a tilt-aligned molecule shows the above-mentioned relationship of the refractive index ellipsoid in the retardation film.

Any appropriate compound can be used as the above-mentioned tilt-aligned molecule. In one embodiment, the molecule can be a thermoplastic resin. In another embodiment, the molecule can be a discotic liquid crystal compound.

Examples of the above-mentioned thermoplastic resin include a norbornene-based resin and a cellulose-based resin such as triacetylcellulose (TAC). Of those, a norbornene-based resin is preferred. Details about the norbornene-based resin are as described in the above-mentioned section A-1-1.

The above-mentioned discotic liquid crystal compound generally refers to a liquid crystalline compound having the following disk-shapedmolecular structure. A cyclic mother nucleus such as benzene, 1,3,5-triazine, or calixarene is provided at the center of the molecule, and is radially substituted with, for example, a linear alkyl group, an alkoxy group, or a substituted benzoyloxy group as a side chain thereof. Representative examples of the discotic liquid crystal compound include the benzene derivative, the triphenylene derivative, the truxene derivative, and the phthalocyanine derivative described in a study report by C. Destrade et al. , Mol. Cryst. Liq. Cryst. Vo. 71, p. 111 (1981), the cyclohexane derivative described in a study report by B. Kohne et al., Angew. Chem. Vol. 96, p. 70 (1984), and the azacrown-based and phenylacetylene-based macrocycles described in a study report by J.M. Lehn et al., J. Chem. Soc. Chem. Commun., p. 1794 (1985) and in a study report by J. Zhang et al., J. Am. Chem. Soc. Vol. 116, p. 2655 (1994).

The in-plane retardation value at a wavelength of 590 nm (Re[590]) of the above-mentioned retardation film can be set to any appropriate value depending on purposes. In one embodiment, the Re[590] of the above-mentioned retardation film is preferably 100 nm or less, more preferably 5 nm to 80 nm, particularly preferably 5 nm to 60 nm. When the in-plane retardation value is set to fall within the above-mentioned range, additionally appropriate optical compensation for a liquid crystal cell is performed, and hence a liquid crystal display apparatus having a high contrast ratio in an oblique direction can be obtained.

The thickness direction retardation value at a wavelength of 590 nm (Rth[590]) of the above-mentioned retardation film can be set to any appropriate value depending on purposes. In one embodiment, the Rth[590] of the above-mentioned retardation film is preferably 50 nm to 200 nm, more preferably 60 nm to 180 nm, particularly preferably 80 nm to 160 nm. When the thickness direction retardation value is set to fall within the above-mentioned range, additionally appropriate optical compensation for a liquid crystal cell is performed, and hence a liquid crystal display apparatus having a high contrast ratio in an oblique direction can be obtained.

When the retardation film is constructed of a thermoplastic resin, the retardation film can be obtained by: applying different shearing forces to the respective surfaces of a polymer film formed of the thermoplastic resin by employing the method described in the section A-2-2-1; and subjecting the resultant to a stretching treatment in its short direction. A method for the stretching in the short direction is, for example, a lateral uniaxial stretching method. A specific example of the method of producing the retardation film is described below. That is, when an unstretched norbornene-based resin film is used, and the heating temperature of rolls and a rotational speed ratio of a lower roll to an upper roll

are set to 120°C and 1.25, respectively, the following retardation film can be obtained. The film has a slow axis in its lengthwise direction and contains a molecule tilt-aligned so that the downstream side of the flow direction of the film may be directed upward. When the film is stretched in its short direction at a stretching temperature of 120 °C and a stretching ratio of 1.35 times, the following retardation film can be obtained. The film contains molecules tilt-aligned at an average tilt angle of 18° in the short direction, the molecules each having a refractive index ellipsoid with a relationship of nx=ny>nz, and the film has a slow axis in its lengthwise direction. It should be noted that when the retardation film is constructed of a thermoplastic resin, the thickness of the retardation film is appropriately set depending on purposes, and desired in-plane retardation and desired thickness direction retardation, and is preferably 60 to 150 μm.

When the retardation film is constructed of a liquid crystal compound, the retardation film can be obtained with a discotic liquid crystal compound in the same manner as in the method described in the section A-2-2-1. The tilt alignment state of the liquid crystal compound can be controlled by adjusting, for example, the kind and molecular structure of the compound, the kind of an alignment film, and an additive (such as a plasticizer, a binder, or a surfactant). When the retardation film is constructed with the discotic liquid crystal compound, the thickness of the retardation film is preferably 1 μm to 5 μm.

A-3. Second retardation film

As described above, the laminate optical body of the present invention may further include a second retardation film. The optical properties and placement position of the second retardation film can be appropriately set depending on, for example, purposes and the optical properties of the retardation film **12.** Hereinafter, a representative example is described. It should be noted that the retardation film **12** is referred to as "first retardation film" for convenience in this section. Inaddition, the subscript 1 represents the first retardation film and the subscript 2 represents the second retardation film.

A-3-1. Case where first retardation film is tilt alignment film refractive index ellipsoid of tilt-aligned molecule of which has relationship of nx>ny=nz

In this case, the second retardation film **13** has a slow axis in its short direction (that is, the slow axis is substantially perpendicular to the slow axis of the first retardation film), and its refractive index ellipsoid has a relationship of nx>ny>nz. In this case, the second retardation film **13** is placed on the side opposite to the hydrophilic polymer layer **11b** of the retardation film **12** in the laminate optical body of the present invention.

The second retardation film has an in-plane retardation value $Re_2[590]$ of preferably 80 to 160 nm, more preferably 90 to 150 nm, particularlypreferably 100 to 140 nm. The second retardation film can compensate the optical axis of the polarizing film. Its Nz coefficient (Rth/Re) is preferably 1.1 to 1.8, more preferably more than 1.2 and less than 1.7.

The above-mentioned second retardation film can be formed of any appropriate material. A specific example of the material is a stretched film of a polymer film. A resin that forms the polymer film is preferably a norbornene-based resin or a polycarbonate-based resin. Details about the norbornene-based resin and the polycarbonate-based resin are as described in the above-mentioned section A-1-1.

Any appropriate method can be adopted as a method of producing the above-mentioned stretched film. Examples of the stretching method include lateral uniaxial stretching, fixed-end biaxial stretching, and sequential biaxial stretching. The fixed-end biaxial stretching is specifically, for example, a method involving stretching the polymer film in its short direction (lateral direction) while causing the film to run in its lengthwise direction. The method can be apparently lateral uniaxial stretching. A stretching temperature is preferably 135 to 165°C, more preferably 140 to 160°C. A stretching ratio is preferably 1.2 to 3.2 times, more preferably 1.3 to 3.1 times. In this case, the thickness of the film is representatively 20 to 80 μm, preferably 25 to 75 μm, more preferably 30 to 60 μm.

Another specific example of the material that forms the above-mentioned second retardation film is a non-liquid crystalline material, preferably a non-liquid crystalline polymer. Preferred specific examples of the polymer include polymers such as polyamide, polyimide, polyester, polyether ketone, polyamideimide, and polyester imide. Those polymers may be used alone or as a mixture. Of those, polyimide is particularly preferred because of its high transparency, high alignment property, and high stretchability.

In this case, the above-mentioned second retardation film can be representatively formed by applying a solution of the above-mentioned non-liquid crystalline polymer onto a base material film and removing the solvent. In the method of forming the second retardation film, a treatment (such as a stretching treatment) for imparting optical biaxiality (nx>ny>nz) is preferably performed. When such treatment is performed, a refractive index difference (nx>ny) can be provided in a plane with reliability. It should be noted that a specific example of the above-mentioned polyimide and a specific example of the method of forming the second retardation film are the polymer and the method of producing an optical compensation film described in JP 2004-46065 A. In this case, the thickness of the film is representatively 0.1

to 10 μm, more preferably 0.1 to 8 μm, particularly preferably 0.1 to 5 μm.

A-3-2. Case where first retardation film is tilt alignment film refractive index ellipsoid of tilt-aligned molecule of which has relationship of nx=ny>nz

In this case, the second retardation film may be placed on the side opposite to the hydrophilic polymer layer **11b** of the retardation film **12** in the laminate optical body of the present invention, or may be placed between the retardation film **12** and the hydrophilic polymer layer **11b** in the laminate optical body. A retardation film having appropriate optical properties can be used depending on purposes and its placement position. The second retardation film **13** may be a single-layer film, or may be a film obtained by laminating two or more layers.

The in-plane retardation value at a wavelength of 590 nm ($Re_2$[590]) of the above-mentioned second retardation film can be set to any appropriate value depending on purposes. The in-plane retardation value $Re_2$[590] is preferably less than 100 nm, more preferably less than 80 nm. When the in-plane retardation value is set to fall within the above-mentioned range, additionally appropriate optical compensation for a liquid crystal cell is performed, and hence a liquid crystal display apparatus having a high contrast ratio in an oblique direction can be obtained.

The thickness direction retardation value at a wavelength of 590 nm ($Rth_2$[590]) of the above-mentioned second retardation film can be set to any appropriate value depending on purposes. The thickness direction retardation value $Rth_2$[590] is preferably less than 200 nm, more preferably 50 nm to 180 nm. When the thickness direction retardation value is set to fall within the above-mentioned range, additionally appropriate optical compensation for a liquid crystal cell is performed, and hence a liquid crystal display apparatus having a high contrast ratio in an oblique direction can be obtained.

A total in-plane retardation value $Re_{1+2}$[590] of the first retardation film and the second retardation film is preferably 10 nm or more and less than 200 nm, more preferably 10 nm to 160 nm. In addition, a total thickness direction retardation value $Rth_{1+2}$[590] thereof is preferably 50 nm to 300 nm, more preferably 100 nm to 280 nm. When the total in-plane retardation and the total thickness direction retardation are set to fall within predetermined ranges as described above, additionally appropriate optical compensation for a liquid crystal cell is performed, and hence a liquid crystal display apparatus having a high contrast ratio in an oblique direction can be obtained.

The above-mentioned second retardation film can have any appropriate relationship of a refractive index ellipsoid as long as the suitable $Re_2$[590] and the suitable $Rth_2$[590] described above are obtained. In one embodiment, the second retardation film can be the so-called positive A plate whose refractive index ellipsoid has a relationship of nx>ny=nz. In another embodiment, the second retardation film can be the so-called negative C plate whose refractive index ellipsoid has a relationship of nx=ny>nz.

Any appropriate material can be adopted as a material that forms the second retardation film as the positive A plate. In one embodiment, a liquid crystal material is preferred, and a liquid crystal material (nematic liquid crystal) having a liquid crystal phase of a nematic phase is more preferred. In another embodiment, a thermoplastic resin is preferred. The thermoplastic resin may be a resin having a positive intrinsic birefringence, or may be a resin having a negative intrinsic birefringence.

As the above-mentioned liquid crystal material, for example, a liquid crystal polymer or a liquid crystal monomer can be used. The expression mechanism of liquid crystallinity of the liquid crystal material may be a lyotropic type or a thermotropic type. The alignment state of liquid crystal is preferably homogeneous alignment. The liquid crystal polymer and the liquid crystal monomer may be used each alone or in combination. Specific examples of the above-mentioned liquid crystal monomer and the method of forming the second retardation film include the monomer and the forming method described in JP 2006-178389 A. In this case the thickness of the film is preferably 0.5 to 10 μm, more preferably 0.5 to 8 μm, particularly preferably 0.5 to 5 μm.

Examples of the above-mentioned thermoplastic resin include a norbornene-based resin, a polycarbonate-based resin, a cellulose-based resin, a polyvinyl alcohol-based resin, and a polysulphone-based resin. Of those, a norbornene-based resin and a polycarbonate-based resin are preferred. The norbornene-based resin and the polycarbonate-based resin are as described above. A second retardation film having the above-mentioned desired optical properties (such as an in-plane retardation and a thickness direction retardation) can be obtained by stretching a polymer film formed of any such resin with appropriately selected stretching conditions (such as a stretching temperature, a stretching ratio, and a stretching direction), a stretching method, and the like, depending on the kind of the resin. In this case, the thickness of the film is preferably 5 to 55 μm, more preferably 10 to 50 μm, particularly preferably 15 to 45 μm.

Any appropriate material can be adopted as a material that forms the second retardation film as the negative C plate. In one embodiment, the second retardation film can be a cholesteric alignment fixed layer. The cholesteric alignment fixed layer is specifically, for example, the cholesteric layer described in JP 2003-287623 A. In this case, the thickness of the film is preferably 0.5 to 10 μm, more preferably 0.5 to 8 μm, particularly preferably 0.5 to 5 μm.

In another embodiment, the second retardation film serving as a negative C plate may be formed of a non-liquid crystalline polymer such as polyamide, polyimide, polyester, polyetherketone, polyamideimide, or polyesterimide.

Of those, polyimide is particularly preferred because of its high transparency, high alignment property, and high stretchability. Specific examples of the polyimide and the method of forming the second retardation film include the polymer and the method of producing an optical compensation film described in JP 2004-46065 A. In this case, the thickness of the second retardation film is preferably 0.5 to 10 μm, more preferably 0.5 to 8 μm, particularly preferably 0.5 to 5 μm.

In still another embodiment, the second retardation film as the negative C plate can be a polymer film formed of, for example, a cellulose-based resin such as triacetylcellulose (TAC) or a norbornene-based resin, or a stretched film thereof. The cellulose-based resin and the norbornene-based resin are as describedabove. A method for the stretching is, for example, biaxial stretching (stretching in longitudinal and lateral directions at an equivalent ratio). In this case, the thickness of the film is preferably 45 to 105 μm, more preferably 55 to 95 μm, particularly preferably 50 to 90 μm.

In still further another embodiment, the second retardation film as the negative C plate can be a laminate having the above-mentioned cholesteric alignment fixed layer and a plastic film layer. A resin that forms the plastic film layer is, for example, the above-mentioned cellulose-based resin or the above-mentioned norbornene-based resin.

A-4. Protective film

The above-mentioned protective film (inner protective film) preferably has optical isotropy. Specifically, the inner protective film has a thickness direction retardation Rth[550] of preferably -20 nm to +20 nm, more preferably -10 nm to +10 nm, particularly preferably -6 nm to +6 nm, most preferably -3 nm to +3 nm. The inner protective filmhas an in-plane retardation Re [550] of preferably 0 nm or more and 10 nm or less, more preferably 0 nm or more and 6 nm or less, particularly preferably 0 nm or more and 3 nm or less. Details about the protective film having such optical isotropy are described in JP 2008-180961 A, and the description is incorporated herein by reference.

A-5. Method of producing laminate optical body

The laminate optical body **10** of the present invention is produced by continuously attaching the above-mentioned elongated polarizing film **11** and the above-mentioned elongated retardation film **12** to each other with their lengthwise directions aligned while conveying each of the films in its lengthwise direction (so-called roll-to-roll process). In one embodiment, each of the above-mentioned elongated polarizing film **11** and the above-mentioned elongated retardation film **12** is stored as a roll before being subjected to an attachment step. In another embodiment, the above-mentioned elongated polarizing film **11** is continuously subjected to the attachment step from the production step described in the above-mentioned section A-1-2, and the above-mentioned elongated retardation film **12** is continuously subjected to the attachment step from the production step described in the above-mentioned section A-2.

The above-mentioned polarizing film **11** and the above-mentioned retardation film **12** are attached to each other through a pressure-sensitive adhesive composition or an adhesive composition. A specific method for the attachment involves: applying the pressure-sensitive adhesive composition or the adhesive composition to one surface of one of the polarizing film and the retardation film; attaching the polarizing film and the retardation film to each other after the application; and drying the resultant.

Any appropriate pressure-sensitive adhesive composition or adhesive composition can be adopted as the above-mentioned pressure-sensitive adhesive composition or adhesivecomposition. The pressure-sensitive adhesive composition is preferably an acrylic pressure-sensitive adhesive composition because of its excellent transparency, low cost, and ease of availability. The adhesive composition preferably contains a polyvinyl alcohol-based resin and a cross-linking agent. The polyvinyl alcohol-based resin is preferably an acetoacetyl group-containing polyvinyl alcohol resin. This is because adhesiveness between the polarizing film and the retardation film can be additionally improved, and the durability of the laminate optical body can be improved. Details about the polyvinyl alcohol-based resin and the cross-linking agent are described in, for example, JP 2008-180961 A, and the description is incorporated herein by reference.

A method of applying the pressure-sensitive adhesive composition or adhesive composition is, for example, a roll method, a spraying method, or an immersion method. When the pressure-sensitive adhesive composition is used, the thickness of a coating film can be set so that a thickness after drying may be preferably 10 μm to 60 μm. When the adhesive composition is used, the thickness of the coating film can be set so that the thickness after the drying may be preferably 20 nm to 150 nm. Such thickness can provide a sufficient adhesive strength. A drying temperature is representatively 5 to 150°C, preferably 30 to 120°C. A drying time is representatively 120 seconds or more, preferably 400 seconds or more.

FIG. **3** shows one step in one example of the method of producing the laminate optical body of the present invention. As shown in FIG. **3,** the polarizing film **11** and the retardation film **12** to which the above-mentioned pressure-sensitive adhesive composition or adhesive composition (not shown) has been applied are sent in the direction indicated by an arrow, and are then attached to each other in such a state that their respective lengthwise directions are aligned. That is, the laminate optical body **10** is obtained by continuously attaching the polarizing film **11** and the retardation film **12** to each other by the roll-to-roll process. It should be noted that in FIG. **3,** reference numerals **111** and **112** represent

rolls that wind an elongated polarizing film and an elongated retardation film, respectively, and reference numeral **113** represents a guide roll for attaching the polarizing film and the retardation film to each other. It should be noted that when the retardation film is a coating film, the retardation film can be representatively transferred onto the polarizing film after having been formed on any appropriate base material by application (not shown).

When the laminate optical body **10** of the present invention further includes the second retardation film **13,** in one embodiment, the laminate optical body **10** is produced by continuously attaching the above-mentioned elongated polarizing film **11,** the above-mentioned elongated retardation film **12,** and the second elongated retardation film **13** to one another with their lengthwise directions aligned while conveying each of the films in its lengthwise direction. In another embodiment, the laminate optical body can be produced by: attaching the first elongated retardation film **12** and the second elongated retardation film **13** to each other by the roll-to-roll process to provide an elongated laminate; and attaching the laminate and the elongated polarizing film **11** to each other by the roll-to-roll process. In still another embodiment, the laminate optical body can be produced by: attaching the elongated polarizing film **11** and the elongated retardation film **12** to each other by the roll-to-roll process to provide an elongated laminate; and attaching the laminate and the second retardation film **13** to each other by the roll-to-roll process.

B. Optical film

An optical film of the present invention is obtained by cutting or punching the laminate optical body obtained as described above. Any appropriate method can be adopted for the cutting or the punching. An optical film for a large-scale liquid crystal display apparatus can be easily punched or cut out of the laminate optical body of the present invention because the laminate optical body is wide as a result of the method of producing the polarizing film. In addition, the laminate optical body is advantageous in terms of cost because the amount of a discarded material due to the punching or the like can be reduced. When the resultant laminate optical body is cut into dimensions corresponding to the dimensions of a liquid crystal display apparatus to which the laminate optical body is to be applied, two or more laminate optical bodies of this kind superimposed on each other are preferably cut in terms of production efficiency. A conventional laminate optical body (polarizing plate) having the same construction has a large thickness, and hence a large force must be applied for cutting two or more laminate optical bodies of this kind superimposed on each other. As a result, the laminate optical bodies superimposed on each other are apt to shift, and hence the dimensional accuracy of an optical film to be obtained may be insufficient. On the other hand, the laminate optical body of the present invention is extremely preferred in terms of production efficiency because the laminate optical body has so small a thickness that even when two or more laminate optical bodies of this kind superimposed on each other are cut, the cutting can be accurately performed.

C. Liquid crystal display apparatus

A liquid crystal display apparatus of the present invention includes the above-mentioned optical film of the present invention and a liquid crystal cell. FIG. **4** is a schematic sectional view of a liquid crystal display apparatus according to a preferred embodiment of the present invention. A liquid crystal display apparatus **100** includes a liquid crystal cell **20** and an optical film **10'** placed on at least one side of the liquid crystal cell **20.** The optical film **10'** is placed so that the base material layer **11a** may be placed outside. When the optical film **10'** is placed only on one side of the liquid crystal cell, an ordinary polarizing plate is placed on the other side. Any appropriate driving mode can be adopted as a driving mode for the liquid crystal cell **20.** Representative examples of the driving mode include a super twisted nematic (STN) mode, a twisted nematic (TN) mode, an in-plane switching (IPS) mode, a vertical aligned (VA) mode, an optically compensated birefringence (OCB) mode, a hybrid aligned nematic (HAN) mode, and an axially symmetric aligned microcell (ASM) mode. When a retardation film whose refractive index ellipsoid shows a relationship of nx>ny=nz or nx>ny>nz is used as the retardation film of the optical film **10',** the driving mode is preferably a VA mode. When an O plate is used as the retardation film of the optical film **10',** the driving mode is preferably the TN mode. This is because extremely good optical compensation is realized by the retardation film of the optical film **10'.**

The optical film **10'** is preferably placed on each of both sides of the liquid crystal cell **20** as shown in FIG. **4.** The optical films **10', 10'** placed on both sides of the liquid crystal cell are more preferably cut or punched out of the same raw film (laminate optical body). When the optical films are cut or punched out of the same raw film (laminate optical body), the shift of an optical axis is extremely small. Even if an axis shift exists, a pair of optical films substantially identical to each other in the extent of the axis shift is obtained, and hence a liquid crystal display apparatus having extremely excellent display properties is obtained. The optical films **10', 10'** (or the optical film **10'** and the polarizing plate) may be placed so that their respective absorption axes may be perpendicular to each other, or may be placed so that the axes may be parallel to each other. The placement is representatively performed so that the respective absorption axes may be perpendicular to each other. Therefore, in the case where the liquid crystal cell is in the TN mode, a bright state (white display) is established when no voltage is applied (normally white mode), or in the case where the liquid

crystal cell is in the VA mode, a dark state (black display) is established when no voltage is applied (normally black mode).

Examples

Hereinafter, the present invention is specifically described by way of examples, but the present invention is not limited by these examples. It should be noted that measurement methods in the examples are as described below. In addition, when an angle except a tilt angle is represented in each example, the lengthwise direction of a film is set to 0° and a direction counterclockwise from the lengthwise direction is defined as being positive.

(1) Dimensional change rate

A laminate optical body obtained in each of the examples and comparative examples was cut into a piece measuring 10 cm by 10 cm, and the piece was defined as a test piece. The test piece was marked at predetermined positions at a predetermined interval. The marked test piece was placed in an oven (manufactured by ESPEC Corp. , product name: PH-201), and was then left to stand at 80°C for 500 hours. After that, the test piece was taken out. The interval of the markings of the test piece thus taken out was measured, and then a dimensional change rate was determined from the following equation.

$$\text{Dimensional change rate } (\%) = \{(D_A - D_B)/D_A\} \times 100$$

$D_A$: A marking distance before the test piece is placed in the oven
$D_B$: A marking distance after the test piece has been placed in the oven
In addition, a test piece marked in the same manner as in the foregoing was placed in a thermo-hygrostat oven (manufactured by ESPEC Corp. , product name: PL-2KT), and was then left to stand under the conditions of 60°C and 90%RH for 500 hours. After that, the test piece was taken out. The interval of the markings of the test piece thus taken out was measured, and then a dimensional change rate was determined by using the same equation as that described above.

(2) Axial accuracy

A retardation film produced in each of Reference Examples 4 to 7 was cut into a piece measuring 5 cm by 3 cm, and the piece was defined as a test piece. Fifteen angles of the slow axis of the test piece were measured with an apparatus available under the product name "KOBRA-21ADH" from Oji Scientific Instruments in the widthwise direction of a raw film at an equal interval. The average of the fifteen angles was determined, and a standard deviation from the average was defined as an indication of axial accuracy.

(3) Brightness unevenness

The backlight of a liquid crystal display apparatus obtained in each of the examples and the comparative examples was turned on in a dark room at 23°C. After a lapse of 20 minutes, measurement was performed. Specifically, a display screen was photographed with a two-dimensional color distribution-measuring apparatus "CA-1500" manufactured by KONICA MINOLTA. Brightnesses at 24,235 points selected at random from the entire display screen were measured with the above-mentioned apparatus. The average of the brightnesses was determined, and a standard deviation from the average was defined as brightness unevenness.

(4) Retardation values (Re[590], Rth[590]) and variations

The retardation of a retardation film produced in a reference example was measured with an apparatus available under the product name "Axoscan" from AXOMETRICS, Inc. at a wavelength of 590 nm and 23°C. A difference between the maximum and minimum of a retardation value in a predetermined direction was defined as a variation.

(5) Average tilt angle

As shown in the following equations (I) and (II), $\theta_{air}$ and $\theta_{AL}$ were determined by substituting ne, no, and a retardation value (each of the values measured at polar angles of -40° to +40° (a normal direction was set to 0°) in a direction parallel to a slow axis in an increment of 5°) into Witte's equation described in Journal of Applied Physics, Vol. 38 (1999), P. 748, and the average of these angles was defined as an average tilt angle. It should be noted that a value

measured with an apparatus available under the product name "Axoscan" from AXOMETRICS, Inc. at a wavelength of 590 nm and 23°C was used as the retardation value. In addition, values measured with an Abbe refractometer (manufactured by ATAGO CO., LTO., product name: "DR-M4") were used as the ne and the no.

[Math. 2]

$$R = \frac{d \cdot (n_e - n_o)}{\cos\alpha} \cdot \left[ \frac{1}{2} + \frac{1}{4} \cdot \frac{\sin(2\Theta_{air} - 2\alpha) - \sin(2\Theta_{AL} - 2\alpha)}{\Theta_{air} - \Theta_{AL}} \right] \quad \cdots \text{(I)}$$

$$\alpha = \arcsin\left( \frac{\sin\phi}{n_o} \right) \quad \cdots \text{(II)}$$

(6) Nz coefficient, refractive index ratio of molecule, and refractive index ellipsoid of molecule

An Nz coefficient was calculated from the Re[590] and the Rth[590] measured as described in the above-mentioned section (4). In addition, the refractive index ratio and refractive index ellipsoid of a molecule were calculated from the Re[590] and the Rth[590], and the above-mentioned average tilt angle.

(7) Contrast

The optical properties of all optical members used in a liquid crystal display apparatus typified by a retardation film, a polarizing film, and a liquid crystal cell produced in reference examples were actually measured by ordinary methods. The contrast of the liquid crystal display apparatus was simulated with those actually measured values and an apparatus available under the product name "LCD Master" from Shintech, Inc.

(8) Axial angle

An axial angle except the axial accuracy described in the above-mentioned section (2) was measured with an apparatus available under the product name "KOBRA 21-WPR" from Oji Scientific Instruments.

(9) Thickness

Measurement was performed with an apparatus available under the product name "MCPD-3000" from Otsuka Electronics Co., Ltd.

(Reference Example 1)

(Production of polarizing film)

A polyvinyl alcohol resin (manufactured by The Nippon Synthetic Chemical Industry Co. , Ltd. , product name: "Gohsenol NH-18," degree of saponification: 98 to 99%) was dissolved in hot water, and then the solution was cooled. Thus, a 7-wt% aqueous solution of polyvinyl alcohol was prepared. Meanwhile, a norbornene-based resin film (manufactured by JSR Corporation, product name: "ARTON," thickness: 100 μm) was prepared as a base material. The above-mentioned aqueous solution was applied to the surface of the base material, and was then dried at 100°C for 10 minutes. Thus, a polyvinyl alcohol thin film having a thickness of 7 μm was formed on the base material. A laminate of the base material and the thin film thus obtained was stretched in its short direction at a stretching temperature of 140°C and a stretching ratio of 4.5 times. The stretched laminate had an entire thickness of 60 μm and the polyvinyl alcohol thin film had a thickness of 3 μm. The laminate thus stretchedwas immersed in an aqueous solution of iodine (iodine:potassium iodine:water=1:10:200 (weight ratio)) at 30°C for 30 seconds, and was then immersed in an aqueous solution of boric acid (5 wt%) at 55°C for 60 seconds. Further, the laminate was immersed in an aqueous solution of potassium iodide (5 wt%) at 30°C for 10 seconds so that the polyvinyl alcohol thin film was dyed and cross-linked. The resultant was dried

at 80°C for 4 minutes. Thus, a roll-shaped polarizing film having a construction "base material layer/hydrophilic polymer layer" was obtained. The resultant polarizing film had a transmittance of 41.5% and a polarization degree of 99%. In addition, the resultant polarizing film had an absorption axis in its short direction (TD).

(Reference Example 2)

(Production of polarizing film)

A polyvinyl alcohol resin (manufactured by The Nippon Synthetic Chemical Industry Co., Ltd. , product name: "Gohsenol NH-18," degree of saponification: 98 to 99%) was dissolved in hot water, and then the solution was cooled. Thus, a 7-wt% aqueous solution of polyvinyl alcohol was prepared. Meanwhile, a norbornene-based resin film (manufactured by JSR Corporation, product name: "ARTON," thickness: 100 μm) was prepared as a base material. The above-mentioned aqueous solution was applied to the surface of the base material, and was then dried at 100°C for 10 minutes. Thus, a polyvinyl alcohol thin film having a thickness of 7 μm was formed on the base material. A laminate of the base material and the thin film thus obtained was stretched in its short direction at a stretching temperature of 140°C and a stretching ratio of 4.5 times. The stretched laminate had an entire thickness of 60 μm and the polyvinyl alcohol thin filmhad a thickness of 3 μm. The laminate thus stretched was immersed in an aqueous solution of iodine (iodine:potassium jodine:water=1:10:200 (weight ratio)) at 20°C for 60 seconds, and was then immersed in an aqueous solution of boric acid (10 wt%) at 55°C for 420 seconds. Further, the laminate was immersed in an aqueous solution of potassium iodide (4 wt%) at 30°C for 10 seconds so that the polyvinyl alcohol thin film was dyed and cross-linked. The resultant was dried at 60°C for 4 minutes. Thus, a roll-shaped polarizing film having a construction "base material/polarizing thin film" was obtained. The resultant polarizing film had a transmittance of 41.5% and a polarization degree of 99%. In addition, the resultant polarizing film had an absorption axis in its short direction.

(Reference Example 3)

(Polarizing plate)

A commercially available polarizing plate (manufactured by Nitto Denko Corporation, product name: "NPF-TEG1465DU") having a construction "projective film/polarizer/protective film" was used. The in-plane retardation of the protective film on a liquid crystal cell side of the polarizing plate is substantially zero. In addition, the polarizing plate has a single axis transmittance of about 44%, and has an absorption axis in its lengthwise direction (MD).

(Reference Example 4)

(Production of retardation film)

While a norbornene-based resin film (manufactured by JSR Corporation, trade name: "ARTON," thickness: 100 μm, width: 1.2 m, length: 500m) was sequentially unreeled from a roll-shaped winding body of the film, the film was stretched by a roll type longitudinal uniaxial stretching method at 150°C in its lengthwise direction by a factor of 1.3, and was then cut so as to have a width of 1 m. Thus, an elongated retardation film was obtained. The resultant retardation film had a slow axis in its lengthwise direction (MD). The resultant retardation film had a thickness of 70 μm, an in-plane retardation Re[590] of 55 nm, a variation in the Re[590] in its widthwise direction of 5 nm, and an axial accuracy of the slow axis of 0.5°. The refractive index ellipsoid of the resultant retardation film had a relationship of nx>ny=nz.

(Reference Example 5)

(Production of retardation film)

While a norbornene-based resin film (manufactured by Zeon Corporation, trade name: "ZEONOR," thickness: 100 μm, width: 1.3 m, length: 1,000 m) was sequentially unreeled from a roll-shaped winding body of the film, the film was stretched by a roll type longitudinal uniaxial stretching method at 140°C in its lengthwise direction by a factor of 1.15, and was then cut so as to have a width of 1 m. Thus, an elongated retardation film was obtained. The resultant retardation film had a slow axis in its lengthwise direction (MD). The resultant retardation film had a thickness of 94 μm, an in-plane retardation Re[590] of 64 nm, a variation in the Re [590] in its widthwise direction of 4 nm, and an axial accuracy of the slow axis of 0.8°. The refractive index ellipsoid of the resultant retardation film had a relationship of nx>ny=nz.

(Reference Example 6)

(Production of retardation film)

While a norbornene-based resin film (manufactured by JSR Corporation, trade name: "ARTON," thickness: 100 μm, width: 1.2 m, length: 500m) was sequentially unreeled from a roll-shaped winding body of the film, the film was stretched by a tenter type lateral uniaxial stretching method at 150°C in its lateral direction by a factor of 1.3, and was then cut so as to have a width of 1 m. Thus, an elongated retardation film was obtained. The resultant retardation film had a slow axis in its short direction (TD). The resultant retardation film had a thickness of 72 μm, an in-plane retardation Re[590] of 53 nm, a variation in the Re[590] in its widthwise direction of 8 nm, and an axial accuracy of the slow axis of 1.5°. Therefractive index ellipsoid of the resultant retardation film had a relationship of nx>ny=nz.

(Reference Example 7)

(Production of retardation film)

While a norbornene-based resin film (manufactured by Zeon Corporation, trade name: "ZEONOR," thickness: 100 μm, width: 1.3 m, length: 1,000 m) was sequentially unreeled from a roll-shaped winding body of the film, the film was stretched by a tenter type lateral uniaxial stretching method at 140°C in its lateral direction by a factor of 1.15, and was then cut so as to have a width of 1 m. Thus, an elongated retardation film was obtained. The resultant retardation film had a slow axis in its short direction (TD). The resultant retardation film had a thickness of 94 μm, an in-plane retardation Re[590] of 60 nm, a variation in the Re[590] in its widthwise direction of 4.5 nm, and an axial accuracy of the slow axis of 1.8°. The refractive index ellipsoid of the resultant retardation film had a relationship of nx>ny=nz.

(Reference Example 8)

(Production of retardation film (O plate))

An unstretched norbornene-based resin film (manufactured by Zeon Corporation, "ZEONOR" film) was rolled while rolls were heated to 120°C and a rotational speed ratio of a lower roll to an upper roll was set to 1.1. Thus, a roll-shaped retardation film was obtained. The resultant retardation film had an in-plane retardation value of 90 nm and an average tilt angle of 30°, the refractive index ratio of a molecule thereof was 3, and the direction of its slow axis was its lengthwise direction. The refractive index ellipsoid of a molecule of the resultant tilt-aligned retardation film had a relationship of nx>ny>nz.

(Reference Example 9)

(Production of retardation film (O plate))

The same operations as those of Reference Example 8 were performed except that a rotational speed ratio of a lower roll to an upper roll was set to 1.25. Next, the resultant film was stretched at a stretching temperature of 120°C and a stretching ratio of 1.15 times in the short direction (TD direction) of the film. Thus, a roll-shaped retardation film was obtained. The resultant retardation film had an in-plane retardation value of 30 nm and an average tilt angle of 50°, the refractive index ratio of a molecule thereof was 5.2, and the direction of its slow axis was its short direction. The refractive index ellipsoid of a molecule of the resultant tilt-aligned retardation film had a relationship of nx>ny>nz.

(Reference Example 10)

(Production of retardation film A (O plate))

20 Parts by weight of a polymer liquid crystal compound represented by the following formula (IV) (weight average molecular weight: 5,000) and 80 parts by weight of a polymerizable liquid crystal compound (manufactured by BASF, trade name: "Paliocolor LC242," ne=1.654, no=1.523) were dissolved in 30 parts by weight of cyclopentanone. 0.3 Part by weight of a surface adjustor (manufactured by BYK Chemie, trade name: "BYK 375") was added to the resultant solution, and then 5 parts by weight of a polymerization initiator (manufactured by Ciba, trade name: "IRGACURE 907") were added to the mixture. Further, cyclopentanone was added to the mixture so that a sold content concentration was 20 wt%. Thus, an application solution was obtained.

[Chem. 2]

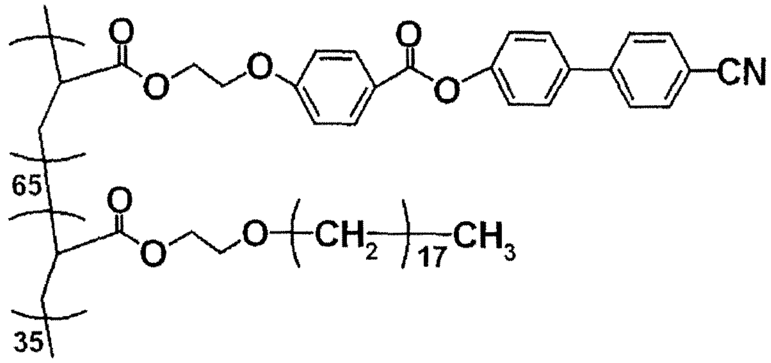

(IV)

A polyethylene terephthalate film (manufactured by Toray Industries, Inc., trade name: "RC06") was subjected to a rubbing treatment in the lengthwise direction of the film. Thus, analignment base material was obtained. The above-mentioned application solution was uniformly applied to the rubbing-treated surface of the alignment base material. Thus, an application layer (Re[590]=90 nm) was formed. The application layer was heat-dried in an air circulation type oven at 80°C for 2 minutes. Thus, a tilt-aligned liquid crystal solidified layer (Re[590]=90 nm) was formed. The solidified layer was cured by applying UV light with a conveyor type UV light irradiation apparatus under an air atmosphere so that a dose on the surface of the solidified layer at a wavelength of 365 nm was 500 $mJ/cm^2$. Thus, a laminate A in which a retardation film A (thickness: 1.5 μm) as a liquid crystal cured layer was laminated on the alignment base material was formed. The resultant retardation film A had an in-plane retardation value Re[590] of 90 nm and an average tilt angle of 35°, and the direction of its slow axis was 0° (all the values were central values). The refractive index ellipsoid of a molecule of the resultant tilt-aligned retardation film had a relationship of nx>ny=nz.

(Reference Example 11)

(Production of retardation film B)

A commercially available, elongated norbornene-based resin film (manufactured by Zeon Corporation, trade name: "ZEONOR") that had already been stretched was used as a retardation film B. The retardation film B had an in-plane retardation value Re[590] of 130 nm and an Nz coefficient of 1.5, and the direction of its slow axis was 90° (all the values were central values). The refractive index ellipsoid of the film had a relationship of nx>ny>nz.

(Reference Example 12)

(Production of retardation film (O plate))

An unstretched norbornene-based resin film (manufactured by Zeon Corporation, "ZEONOR" film) was rolled while rolls were heated to 120°C and a rotational speed ratio of a lower roll to an upper roll was set to 1.25. Thus, a roll-shaped film was obtained. The film was stretched at a stretching temperature of 120°C and a stretching ratio of 1.35 times in the short direction (TD direction) of the film. Thus, a roll-shaped retardation film I was obtained. The resultant retardation film had an in-plane retardation value Re[590] of 50 nm, a thickness direction retardation value Rth[590] of 150 nm, and an average tilt angle of 18°, and the direction of its slow axis was 0° (lengthwise direction) (all the values were central values). Further, the refractive index ellipsoid of a molecule of the resultant tilt-aligned retardation film had a relationship of nx=ny>nz.

(Reference Example 13)

(Liquid crystal cell)

A liquid crystal panel was taken out of a liquid crystal display apparatus including a liquid crystal cell in a VA

mode (manufactured by SONY CORPORATION, 32 inch liquid crystal television set, model: S-2500), and then all optical films placed above and below the liquid crystal cell were removed. After that, the surfaces of the glass substrates above and below the liquid crystal cell were washed before the liquid crystal cell was used.

(Reference Example 14)

(Liquid crystal cell)

A liquid crystal panel was taken out of a liquid crystal display apparatus including a liquid crystal cell in a TN mode (manufactured by BENQ, 17 inch liquid crystal monitor, model: "FP71+"), and then all optical films placed above and below the liquid crystal cell were removed. After that, the surfaces of the glass substrates above and below the liquid crystal cell were washed before the liquid crystal cell was used.

(Example 1)

(Production of laminate optical body)

The polarizing film obtained in Reference Example 1 and the retardation film obtained in Reference Example 4 were attached to each other through an acrylic pressure-sensitive adhesive (thickness: 20 μm) by a roll-to-roll process as shown in FIG. 3. Thus, a roll-shaped laminate optical body was obtained. Table 1 below shows the axial accuracy of the retardation film used, and the total thickness and dimensional change rate of the resultant laminate optical body together with the brightness unevenness of a liquid crystal display apparatus to be described later.

(Production of liquid crystal display apparatus)

The roll-shaped laminate optical body (raw film) obtained as described above was cut so as to correspond to the size of the liquid crystal cell of Reference Example 13. Thus, an optical film was obtained. It should be noted that the cutting was performed so that the lengthwise direction of the optical film and the absorption axis of the polarizing film were perpendicular to each other. Two optical films were cut out of the same raw film, and then the films were each attached to the top or bottom of the liquid crystal cell of Reference Example 13 through an acrylic pressure-sensitive adhesive (thickness: 20 μm). Thus, a liquid crystal panel was obtained. The liquid crystal panel was coupled with the backlight unit of the liquid crystal display apparatus of which the liquid crystal cell had been taken out described above. Thus, a liquid crystal display apparatus was obtained. Table 1 below shows the brightness unevenness of the resultant liquid crystal display apparatus, FIG. **5A** shows a photograph obtained by photographing the display screen (black image) of the apparatus, and FIG. **5B** shows the brightness distribution of the display screen. It should be noted that the brightness distribution is obtained by measuring in-plane brightnesses from the black image and color-coding the brightnesses depending on a brightness range.

[Table 1]

| | Polarizin g film (absorpti on axis direction ) | Retardation film | | Thickne ss (μm) | Dimension al change rate (high temperatu re) | Dimensional change rate (high temperature, high humidity) | Brightness unevenness (cd) |
|---|---|---|---|---|---|---|---|
| | | Slow axis direction | Axial accuracy | | | | |
| Example 1 | Reference Examples 1 (TD) | Reference Example 4 (MD) | 0.5° | 116 | ±0.07% | ±0.03% | 0.0269 |
| Example 2 | Reference Example 1 (TD) | Reference Example 5 (MD) | 0.8° | 140 | ±0.09% | ±0.05% | 0.0280 |
| Comparative Example 1 | Reference Example 3 (MD) | Reference Example 6 (TD) | 1.5° | 166 | ±0.33% | ±0.18% | 0.0379 |

(continued)

| | Polarizing film (absorption axis direction ) | Retardation film | | Thickness (μm) | Dimensional change rate (high temperature) | Dimensional change rate (high temperature, high humidity) | Brightness unevenness (cd) |
|---|---|---|---|---|---|---|---|
| | | Slow axis direction | Axial accuracy | | | | |
| Comparative Example 2 | Reference Example 3 (MD) | Reference Example 7 (TD) | 1.8° | 190 | ±0.38% | ±0.19% | 0.0439 |

(Example 2)

A roll-shaped laminate optical body was obtained in the same manner as in Example 1 except that the retardation film obtained in Reference Example 5 was used as a retardation film. A liquid crystal display apparatus was produced in the same manner as in Example 1 except that the laminate optical body (raw film) was used. Table 1 above shows the axial accuracy of the retardation film used, the total thickness and dimensional change rate of the resultant laminate optical body, and the brightness unevenness of the liquid crystal display apparatus. Further, FIG. **6A** shows a photograph obtained by photographing the display screen (black image) of the resultant liquid crystal display apparatus, and FIG. **6B** shows the brightness distribution of the display screen.

(Comparative Example 1)

A roll-shaped laminate optical body was obtained in the same manner as in Example 1 except that: the commercially available polarizing plate of Reference Example 3 was used instead of the polarizing film of Reference Example 1; and the retardation film obtained in Reference Example 6 was used as a retardation film. A liquid crystal display apparatus was produced in the same manner as in Example 1 except that the laminate optical body (raw film) was used. Table 1 above shows the axial accuracy of the retardation film used, the total thickness and dimensional change rate of the resultant laminate optical body, and the brightness unevenness of the liquid crystal display apparatus. Further, FIG. **7A** shows a photograph obtained by photographing the display screen (black image) of the resultant liquid crystal display apparatus, and FIG. **7B** shows the brightness distribution of the display screen.

(Comparative Example 2)

A roll-shaped laminate optical body was obtained in the same manner as in Example 1 except that: the commercially available polarizing plate of Reference Example 3 was used instead of the polarizing film of Reference Example 1; and the retardation film obtained in Reference Example 7 was used as a retardation film. A liquid crystal display apparatus was produced in the same manner as in Example 1 except that the laminate optical body (raw film) was used. Table 1 above shows the axial accuracy of the retardation film used, the total thickness and dimensional change rate of the resultant laminate optical body, and the brightness unevenness of the liquid crystal display apparatus. Further, FIG. **8A** shows a photograph obtained by photographing the display screen (black image) of the resultant liquid crystal display apparatus, and FIG. **8B** shows the brightness distribution of the display screen.

(Evaluation for Examples 1 and 2, and Comparative Examples 1 and 2)

As is apparent from Table 1, a retardation film having a slow axis in its lengthwise direction is more excellent in the axial accuracy of the slow axis than a retardation film having a slow axis in its short direction is. Further, the laminate optical bodies of Examples 1 and 2 are significantly excellent in dimensional change rate as compared with the laminate optical bodies of Comparative Examples 1 and 2. The brightness unevenness of each of the liquid crystal display apparatuses of Examples 1 and 2 is significantly small as compared with that of each of the liquid crystal display apparatuses of Comparative Examples 1 and 2 as a result of those properties. Further, as is apparent from comparison among FIG. **5A** and FIG. **5B** to FIG. **8A** and FIG. **8B,** the display unevenness of each of the liquid crystal display apparatuses of Examples 1 and 2 is markedly alleviated as compared with that of each of the liquid crystal display apparatuses of Comparative Examples 1 and 2.

(Example 3)

(Production of laminate optical body)

The polarizing film obtained in Reference Example 2 and the retardation film obtained in Reference Example 8 were attached to each other through an acrylic pressure-sensitive adhesive (thickness: 20 μm) by a roll-to-roll process as shown in FIG. **3.** Thus, a roll-shaped laminate optical body was obtained. Table 2 below shows the overview of the laminate optical body.

(Comparative Example 3)

A roll-shaped laminate optical body was obtained in the same manner as in Example 3 except that the commercially available polarizing plate of Reference Example 3 was used instead of the above-mentioned polarizing film. Table 2 below shows the overview of the laminate optical body.

(Comparative Example 4)

The commercially available polarizing plate of Reference Example 3 was used instead of the above-mentioned polarizing film. The polarizing plate and the retardation film obtained in Reference Example 8 were punched into predetermined sizes with a punching machine, and then the resultant pieces were attached to each other through an acrylic pressure-sensitive adhesive (thickness: 20 μm) with a single-plate attaching machine. Thus, a laminate optical body was obtained. Table 2 below shows the overview of the laminate optical body.

(Comparative Example 5)

A roll-shaped laminate optical body was obtained in the same manner as in Example 3 except that: the commercially available polarizing plate of Reference Example 3 was used instead of the above-mentioned polarizing film; and the retardation film obtained in Reference Example 9 was used instead of the retardation film obtained in Reference Example 8. Table 2 below shows the overview of the laminate optical body.

[Table 2]

| | Example 3 | Comparative Example 3 | Comparative Example 4 | Comparative Example 5 |
|---|---|---|---|---|
| Absorption axis direction of polarizing film (°) | 90 | 0 | 90 | 0 |
| Slow axis direction of retardation film (°) | 0 | 0 | 0 | 90 |
| Production method | Roll-to-roll | Roll-to-roll | Punching | Roll-to-roll |

(Example 4)

(Production of liquid crystal display apparatus)

The roll-shaped laminate optical body (raw film) obtained in Example 3 was cut so as to correspond to the size of the liquid crystal cell of Reference Example 14. Thus, an optical film was obtained. It should be noted that the cutting was performed so that an angle formed between the lengthwise direction of the optical film and the absorption axis of the polarizing film was 45°. Two optical films were cut out of the same raw film, and then the films were each attached to the top or bottom of the liquid crystal cell of Reference Example 14 through an acrylic pressure-sensitive adhesive (thickness: 20 μm). Thus, a liquid crystal panel was obtained. The liquid crystal panel was coupled with the backlight unit of the liquid crystal display apparatus of which the liquid crystal cell had been taken out described above. Thus, a liquid crystal display apparatus was obtained. Table 3 below shows the positional relationship of the optical axis of each layer in the liquid crystal display apparatus.

(Comparative Example 6)

A liquid crystal display apparatus was obtained in the same manner as in Example 4 except that the laminate optical body obtained in Comparative Example 3 was used instead of the laminate optical body obtained in Example 3. Table 3 below shows the positional relationship of the optical axis of each layer in the liquid crystal display apparatus.

(Comparative Example 7)

A liquid crystal display apparatus was obtained in the same manner as in Example 4 except that the laminate optical body obtained in Comparative Example 4 was used instead of the laminate optical body obtained in Example 3. Table 3 below shows the positional relationship of the optical axis of each layer in the liquid crystal display apparatus.

(Comparative Example 8)

A liquid crystal display apparatus was obtained in the same manner as in Example 4 except that the laminate optical body obtained in Comparative Example 5 was used instead of the laminate optical body obtained in Example 3. Table 3 below shows the positional relationship of the optical axis of each layer in the liquid crystal display apparatus.
[Table 3]

| | Direction of optical axis or the like of each layer | Example 4 (°) | Comparative Example 6 | Comparative Example 7 | Comparative Example 8 |
|---|---|---|---|---|---|
| Optical film | Absorption axis of polarizing film | 45 | 135 | 45 | 45 |
| | Slow axis of retardation film | -45 | 135 | -45 | -45 |
| Liquid crystal cell | Upper plate rubbing direction of liquid crystal cell | -135 | -135 | -135 | -135 |
| | Lower plate rubbing direction of liquid crystal cell | -45 | -45 | -45 | -45 |
| Octical | Slow axis of retardation film | 45 | 45 | 45 | 45 |
| | film Absorption axis of polarizing film | 135 | 45 | 135 | 135 |

(Evaluation for Examples 3 and 4, and Comparative Examples 3 to 8)

(1) Contrast

The contrasts of the liquid crystal display apparatus of Example 4 and the liquid crystal display apparatus of Comparative Example 6 in upward, downward, left, and right directions from the direction at a polar angle of 40° were calculated. Table 4 shows the results.
[Table 4]

| | Example 4 Example | Comparative 6 |
|---|---|---|
| Upward | 2, 503 | 17 |
| Downward | 124 | 57 |
| Left | 198 | 39 |
| Right | 90 | 44 |

As is apparent from Table 4, the contrasts in all directions of the liquid crystal display apparatus using the optical film of an example of the present invention are markedly large as compared with those of the liquid crystal display apparatus of Comparative Example 6. Viewing angle compensation is insufficient in Comparative Example 6 because the slow axis of the retardation film and the absorption axis of the polarizing film cannot be made perpendicular to each other by the roll-to-roll process.

(2) Axis shift: comparison between roll-to-roll process and single-plate attachment

An optical film cut out of the laminate optical body obtained in Example 3 and the laminate optical body (optical film) obtained in Comparative Example 4 were compared with each other in terms of an axis shift between the absorption axis of a polarizing film and the slow axis of a retardation film. Specifically, ten optical films of each of Example 3 and Comparative Example 4 were produced, and then the shift of each of the optical films from 90° was measured. Table 5 shows the average and maximum of the shifts.

[Table 5]

| Shift (°) | Example 3 | Comparative Example 4 |
|---|---|---|
| Average | 0.04 | 0.06 |
| Maximum | 0.29 | 0.77 |

As is apparent from Table 5, the extent of the axis shift of the optical film of Example 3 based on the roll-to-roll process is much smaller than that of the optical film of Comparative Example 4 based on single-plate attachment.

(3) Axis shift: comparison between raw films based on roll-to-roll process

The roll-shaped laminate optical body (raw film) obtained in Example 3 and the roll-shaped laminate optical body (raw film) obtained in Comparative Example 5 were compared with each other in terms of an axis shift between the absorption axis of a polarizing film and the slow axis of a retardation film. Specifically, a shift in each roll (raw film) from 90° was measured every 50 mm. Table 6 shows the average, maximum, minimum, and 3σ (σ represents a standard deviation) of the shifts.

[Table 6]

| Shift (°) | Example 3 | Comparative Example 5 |
|---|---|---|
| Average | 0.140368 | 0.672500 |
| Maximum | 0.527117 | 1.500000 |
| Minimum | 0.007117 | 0.150000 |
| 3σ | 0.387394 | 0.911803 |

As is apparent from Table 6, the extent of the axis shift of the laminate optical body of Example 3 is much smaller than that of the laminate optical body of Comparative Example 5. As the laminate optical body of Comparative Example 5 uses an ordinary polarizing plate (having an absorption axis in its lengthwise direction), the slow axis of the retardation film (O plate) must be expressed in its short direction in order that the absorption axis and the slow axis of

the O plate may be made perpendicular to each other. A treatment for expressing the slow axis of the O plate in the short direction is extremely difficult. In addition, it is found that even if the slow axis can be expressed, an axis shift becomes large as shown in Table 6.

(Example 5)

(Production of laminate optical body)

The laminate A obtained in Reference Example 10 and the polarizing film obtained in Reference Example 2 were attached to each other through an acrylic pressure-sensitive adhesive (thickness: 20 μm) by a roll-to-roll process as shown in FIG. 3. After that, an alignment base material (PET film) was removed. Thus, a roll-shaped laminate B in which the retardation film A had been transferred onto the polarizing film was obtained. Next, the laminate B and the retardation film B of Reference Example 11 were attached to each other through an acrylic pressure-sensitive adhesive (thickness: 20 μm) by a roll-to-roll process so that the retardation film A and the retardation film B were opposite to each other. Thus, a laminate optical body was obtained. Table 7 below shows the overview of the resultant laminate optical body.

(Comparative Example 9)

A roll-shaped laminate optical body was obtained in the same manner as in Example 5 except that the commercially available polarizing plate of Reference Example 3 was used instead of the above-mentioned polarizing film. Table 7 below shows the overview of the laminate optical body.

(Comparative Example 10)

The commercially available polarizing plate of Reference Example 3, and the above-mentioned retardation film A and retardation film B were punched into predetermined sizes with a punching machine, and then the resultant pieces were attached to each other through an acrylic pressure-sensitive adhesive (thickness: 20 μm) with a single-plate attaching machine. Thus, a laminate optical body was obtained. Table 7 below shows the overview of the laminate optical body.

[Table 7]

| | Example 5 | Comparative Example 9 | Comparative Example 10 |
|---|---|---|---|
| Absorption axis direction of polarizing film (°) | 90 | 0 | 90 |
| Slow axis direction of retardation film A (°) | 0 | 0 | 0 |
| Slow axis direction of retardation film B (°) | 90 | 90 | 90 |
| Production method | Roll-to-roll process | Roll-to-roll process | punching |

(Example 6)

(Production of liquid crystal display apparatus)

The roll-shaped laminate optical body (raw film) obtained in Example 5 was cut so as to correspond to the size of the liquid crystal cell of Reference Example 14. Thus, an optical film was obtained. It should be noted that the cutting was performed so that an angle formed between the lengthwise direction of the optical film and the absorption axis of the polarizing film was 45°. Two optical films were cut out of the same raw film, and then the films were each attached to the top or bottom of the liquid crystal cell of Reference Example 14 through an acrylic pressure-sensitive adhesive (thickness: 20 μm). Thus, a liquid crystal panel was obtained. The liquid crystal panel was coupled with the backlight unit of the liquid crystal display apparatus of which the liquid crystal cell had been taken out described above. Thus, a liquid crystal display apparatus was obtained. Table 8 below shows the positional relationship of the optical axis of each layer in the liquid crystal display apparatus.

(Comparative Example 11)

A liquid crystal display apparatus was obtained in the same manner as in Example 6 except that: the laminate optical body obtained in Comparative Example 9 was used instead of the laminate optical body obtained in Example 5; and the cutting was performed so that an angle formed between the lengthwise direction of the optical film and the absorption axis of the polarizing film was 135°. Table 8 below shows the positional relationship of the optical axis of each layer in the liquid crystal display apparatus.

(Comparative Example 12)

A liquid crystal display apparatus was obtained in the same manner as in Example 6 except that the laminate optical body obtained in Comparative Example 10 was used instead of the laminate optical body obtained in Example 5. Table 8 below shows the positional relationship of the optical axis of each layer in the liquid crystal display apparatus.

[Table 8]

| | Direction of optical axis or the like of each layer (°) | Example 6 | Comparative Example 11 | Comparative Example 12 |
|---|---|---|---|---|
| Optical film | Absorption axis of polarizing film | 135 | 45 | 135 |
| | Slow axis of retardation film A | 45 | 45 | 45 |
| | retardation film B | 315 | 315 | 315 |
| Liquid crystal cell | Upper plate rubbing direction of liquid crystal cell | 315 | 315 | 315 |
| | Lower plate rubbing direction of liquid crystal cell | 45 | 45 | 45 |
| Optical film | Slow axis of retardation film B | 45 | 45 | 45 |
| | Slow axis of retardation film A | 135 | 135 | 135 |
| | Absorption axis of polarizing film | 45 | 135 | 45 |

(Evaluation for Examples 5 and 6, and Comparative Examples 9 to 12)

(1) Contrast

The contrasts of the liquid crystal display apparatus of Example 6 and the liquid crystal display apparatus of Comparative Example 11 in upward, downward, left, and right directions from the direction at a polar angle of 40° were calculated. Table 9 shows the results.

[Table 9]

| | Example 6 | Comparative Example 11 |
|---|---|---|
| Upward | 178 | 10 |
| Downward | 144 | 15 |
| Left | 700 | 23 |

(continued)

| | Example 6 | Comparative Example 11 |
|---|---|---|
| Right | 489 | 25 |

As is apparent from Table 9, the contrasts in all directions of the liquid crystal display apparatus of Example 6 are markedly large as compared with those of the liquid crystal display apparatus of Comparative Example 11. Viewing angle compensation is insufficient in Comparative Example 11 because the slow axis of the first retardation film and the absorption axis of the polarizing film cannot be made perpendicular to each other by the roll-to-roll process.

(2) Axis shift: comparison between roll-to-roll process and single-plate attachment

An optical film cut out of the laminate optical body obtained in Example 5 and the laminate optical body (optical film) obtained in Comparative Example 10 were compared with each other in terms of an axis shift between the absorption axis of a polarizing film (polarizer) and the slow axis of each of a retardation film A and a retardation film B. Specifically, ten optical films of each of Example 5 and Comparative Example 10 were produced, and then the shift of each of the optical films from 90° was measured. Table 10 shows the average, maximum, minimum, and difference (range) between the maximum and the minimum of the shifts.

[Table 10]

| Shift (°) | Polarizing film-retardation film A | | Polarizing film-retardation film B | | Retardation film A-retardation film B | |
|---|---|---|---|---|---|---|
| | Example 5 | Comparative Example 10 | Example 5 | Comparative Example 10 | Example 5 | Comparative Example 10 |
| Average | 0.04 | 0.06 | 90.02 | 90.03 | 0.03 | 0.03 |
| Maximum | 0.29 | 0.54 | 90.12 | 90.32 | 0.22 | 0.46 |
| Minimum | -0.21 | -0.79 | 89.91 | 89.34 | -0.2 | -0.73 |
| Range | 0.5 | 1.33 | 0.21 | 0.98 | 0.42 | 1.19 |

As is apparent from Table 10, the extent of the axis shift of the optical film of Example 5 based on the roll-to-roll process is much smaller than that of the optical film of Comparative Example 10 based on single-plate attachment.

(Example 7)

(Production of laminate optical body)

The retardation film I obtained in Reference Example 12 and the polarizing film obtained in Reference Example 2 were attached to each other through an aqueous adhesive (thickness: 80 nm) by a roll-to-roll process as shown in FIG. 3. Thus, a roll-shaped laminate optical body was obtained. Table 11 below shows the overview of the laminate optical body.

(Comparative Example 13)

A roll-shaped laminate optical body was obtained in the same manner as in Example 7 except that the commercially available polarizing plate of Reference Example 3 was used instead of the above-mentioned polarizing film. Table 11 below shows the overview of the laminate optical body.

(Comparative Example 14)

The retardation film I obtained in Reference Example 12 and the polarizing film obtained in Reference Example 2 were punched into predetermined sizes with a punching machine, and then the resultant pieces were attached to each other through an aqueous adhesive (thickness: 80 nm) with a single-plate attaching machine. Thus, a laminate optical body was obtained. Table 11 below shows the overview of the laminate optical body.

[Table 11]

| | Example 7 | Comparative Example 13 | Comparative Example 14 |
|---|---|---|---|
| Absorption axis direction of polarizing film (°) | 90 | 0 | 90 |
| Slow axis direction of retardation film I (°) | 0 | 0 | 0 |
| Production method | Roll-to-roll process | Roll-to-roll process | Punching |

(Example 8)

(Production of liquid crystal display apparatus)

The roll-shaped laminate optical body (raw film) obtained in Example 7 was cut so as to correspond to the size of the liquid crystal cell of Reference Example 14. Thus, an optical film was obtained. It should be noted that the cutting was performed so that an angle formed between the lengthwise direction of the optical film and the absorption axis of the polarizing film was 135°. Two optical films were cut out of the same raw film, and then the films were each attached to the top or bottom of the liquid crystal cell of Reference Example 14 through an acrylic pressure-sensitive adhesive (thickness: 20 $\mu$m). Thus, a liquid crystal panel was obtained. The liquid crystal panel was coupled with the backlight unit of the liquid crystal display apparatus of which the liquid crystal cell had been taken out described above. Thus, a liquid crystal display apparatus was obtained. Table 12 below shows the positional relationship of the optical axis of each layer in the liquid crystal display apparatus.

(Comparative Example 15)

A liquid crystal display apparatus was obtained in the same manner as in Example 8 except that: the laminate optical body obtained in Comparative Example 13 was used instead of the laminate optical body obtained in Example 7; and the cutting was performed so that an angle formed between the lengthwise direction of the optical film and the absorption axis of the polarizing film was 45°. Table 12 below shows the positional relationship of the optical axis of each layer in the liquid crystal display apparatus.
[Table 12]

| | Direction of optical axis or the like of each layer (°) | Example 8 | Comparative Example 15 |
|---|---|---|---|
| Optical film | Absorption axis of polarizing film | 45 | 135 |
| | Slow axis of retardation film I | -45 | -45 |
| Liquid crystal cell | Upper plate rubbing direction of liquid crystal cell | -135 | -135 |
| | Lower plate rubbing direction of liquid crystal cell | -45 | -45 |
| Optical film | Slow axis of retardation film I | 45 | 45 |
| | Absorption axis of polarizing film | 135 | 45 |

(Evaluation for Examples 7 and 8, and Comparative Examples 13 to 15)

(1) Contrast

The contrasts of the liquid crystal display apparatus of Example 8 and the liquid crystal display apparatus of Comparative Example 15 in upward, downward, left, and right directions from the direction at a polar angle of 40° were calculated. Table 13 shows the results.
[Table 13]

| | Example 8 | Comparative comparative Example 15 |
|---|---|---|
| Upward | 309 | 9 |
| Downward | 204 | 24 |
| Left | 862 | 28 |
| Right | 443 | 31 |

As is apparent from Table 13, the contrasts in all directions of the liquid crystal display apparatus of Example 8 are markedly large as compared with those of the liquid crystal display apparatus of Comparative Example 15. Viewing angle compensation is insufficient in Comparative Example 15 because the slow axis of the retardation film I and the absorption axis of the polarizing film cannot be made perpendicular to each other by the roll-to-roll process.

(2) Axis shift: comparison between roll-to-roll process and single-plate attachment

An optical film cut out of the laminate optical body obtained in Example 7 and the laminate optical body (optical film) obtained in Comparative Example 14 were compared with each other in terms of an axis shift between the absorption axis of a polarizing film and the slow axis of a retardation film I. Specifically, ten optical films of each of the example and the comparative example were produced, and then the shift of each of the optical films from 90° was measured. Table 14 shows the average, maximum, minimum, and difference (range) between the maximum and the minimum of the shifts.
[Table 14]

| Shift (°) | Example 7 | Comparative Example 14 |
|---|---|---|
| Average | 0.18 | 0.17 |
| Maximum | 0.56 | 1.27 |
| Minimum | -0.48 | -0.99 |
| range | 1.04 | 2.36 |

As is apparent from Table 14, the extent of the axis shift of the optical film of Example 7 based on the roll-to-roll process is much smaller than that of the optical film of Comparative Example 14 based on single-plate attachment.

(Evaluation for entire examples)

As is apparent from Examples 1 to 8 and Comparative Examples 1 to 15, according to any example of the present invention, the following laminate optical body is obtained. The laminate optical body is excellent in production efficiency, shows an extremely small axis shift of the slow axis of its retardation film and extremely small retardation unevenness of the film, and shows an extremely small dimensional change under a high-temperature, high-humidity environment. It is found that a liquid crystal display apparatus excellent in each of brightness unevenness, display unevenness, and contrast is obtained as a result of the foregoing.

Industrial Applicability

The laminate optical body and optical film of the present invention can each be suitably used in a liquid crystal display apparatus. The laminate optical body and optical film of the present invention can each be particularly suitably used in a liquid crystal display apparatus for large-screen applications. The liquid crystal display apparatus of the present invention can be suitably used in, for example, an OA device such as a personal computer monitor, a notebook personal computer, or a copying machine, a portable device such as a portable phone, a watch, a digital camera, a personal digital assistant (PDA), or a portable game machine, a household electric appliance such as a video camera, a television set, or a microwave oven, an on-vehicle device such as a back monitor, a monitor for a car navigation system, or a car audio, a display device such as an information monitor for commercial shops, a security device such as a surveillance monitor, or a nursing care/medical device such as a nursing monitor or a medical monitor.

Reference Signs List

| | |
|---|---|
| 10 | laminate optical body |
| 10' | optical film |
| 11 | polarizing film |
| 11a | base material layer |
| 11b | hydrophilic polymer layer |
| 12 | retardation film |
| 13 | second retardation film |
| 20 | liquid crystal cell |
| 100 | liquid crystal display apparatus |

## Claims

**1.** An elongated laminate optical body, comprising:

an elongated polarizing film having an absorption axis in a short direction thereof, and including a base material layer and a hydrophilic polymer layer to which a dichromatic substance adsorbs; and
an elongated retardation filmhaving a slow axis in a lengthwise direction thereof.

**2.** An laminate optical body according to claim 1, wherein the hydrophilic polymer layer has a thickness of 1 μm to 10 μm.

**3.** An laminate optical body according to claim 1 or 2, wherein the base material layer serves also as a protective layer for the hydrophilic polymer layer.

**4.** An laminate optical body according to any one of claims 1 to 3, wherein the retardation filmcontains tilt-alignedmolecules.

**5.** An laminate optical body according to claim 4, wherein:

the molecules in the retardation film are continuously or intermittently tilted along a thickness direction of the retardation film; and
when a tilt angle in a case where the molecules are arranged to be parallel to a plane is set to 0°, a tilt angle on a side of the hydrophilic polymer layer is larger than a tilt angle on a side opposite to the hydrophilic polymer layer by 20° to 70°.

**6.** An laminate optical body according to claim 4 or 5, wherein the tilt-aligned molecules have an average tilt angle of 10° to 40°.

**7.** An laminate optical body according to any one of claims 4 to 6, wherein a refractive index ellipsoid of each of the molecules in the retardation film has a relationship of nx>ny=nz.

**8.** An laminate optical body according to claim 7, further comprising, on a side opposite to the hydrophilic polymer layer of the retardation film, a second elongated retardation film which has a slow axis in a short direction thereof and a refractive index ellipsoid of which has a relationship of nx>ny>nz.

**9.** An laminate optical body according to claim 8, wherein the second retardation film has an in-plane retardation value $Re_2[590]$ of 80 to 160 nm and an Nz coefficient of 1.1 to 1.8.

**10.** An laminate optical body according to any one of claims 4 to 6, wherein a refractive index ellipsoid of each of the molecules in the retardation film has a relationship of nx=ny>nz.

**11.** An laminate optical body according to claim 10, wherein the retardation film has an in-plane retardation value $Re_1[590]$ of 100 nm or less and a thickness direction retardation value $Ruth_1[590]$ of 50 nm to 200 nm.

**12.** An laminate optical body according to claim 10 or 11, further comprising a second elongated retardation film, wherein the second retardation film has an in-plane retardation value $Re_2[590]$ of less than 100 nm and a thickness direction retardation value $Ruth_2[590]$ of less than 200 nm.

**13.** An laminate optical body according to claim 12, wherein the retardation film and the second retardation film have a total in-plane retardation value $Re_1+_2[590]$ of 10 nm or more and less than 200 nm, and a total thickness direction retardation value $Rth_{1+2}$[590J of 50 nm to 300 nm.

**14.** A method of producing an elongated laminate optical body, comprising:

applying a composition containing a hydrophilic polymer to an elongated base material to form a thin film;
stretching the thin film together with the base material;
dyeing the stretched thin film to provide an elongated polarizing film including a base material layer and a hydrophilic polymer layer; and
continuously attaching the polarizing film and an elongated retardation film to each other while aligning lengthwise directions of the films.

**15.** A method according to claim 14, wherein the stretching of the thin film is carried out in a short direction thereof together with the base material.

**16.** An optical film, which is obtained by cutting or punching the laminate optical body according to any one of claims 1 to 13.

**17.** A liquid crystal display apparatus, comprising:

the optical film according to claim 16; and
a liquid crystal cell.

Fig. 1A

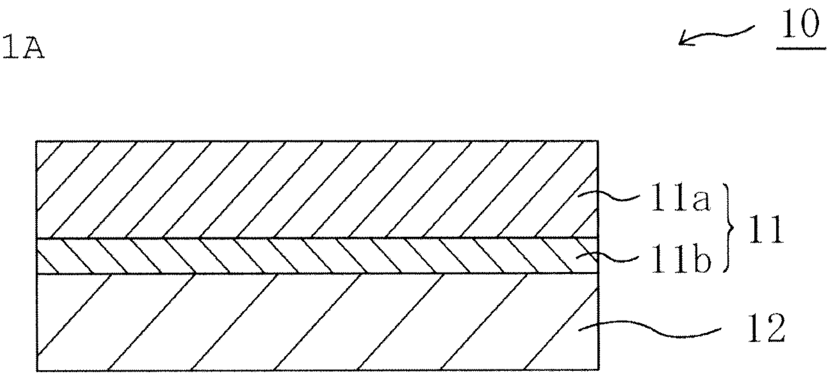


Fig. 1B

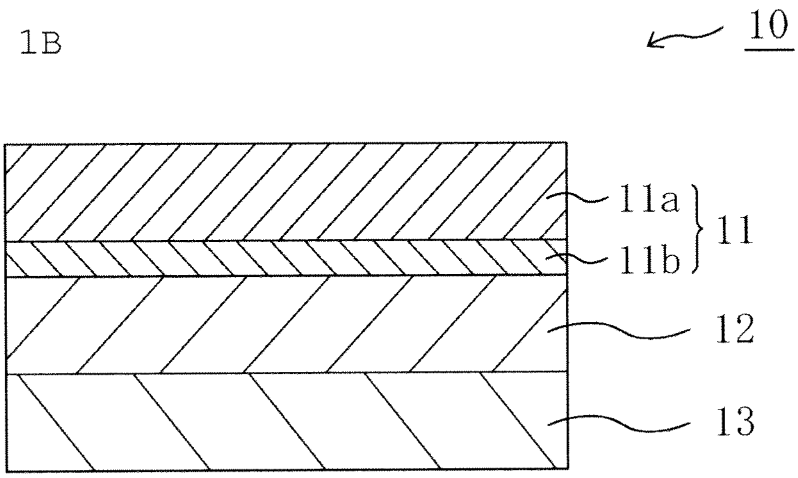

Fig. 2

(a)

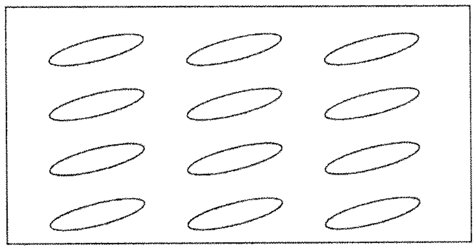

(b)

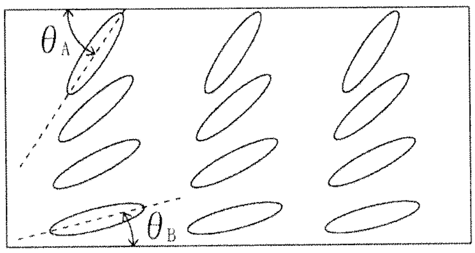

Fig. 3

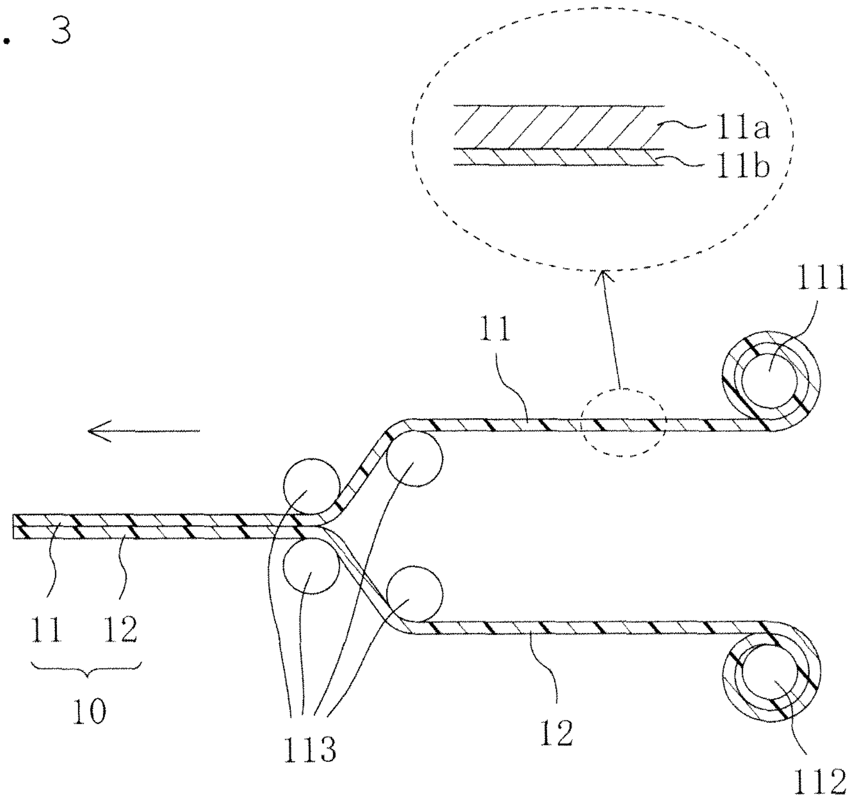


Fig. 4

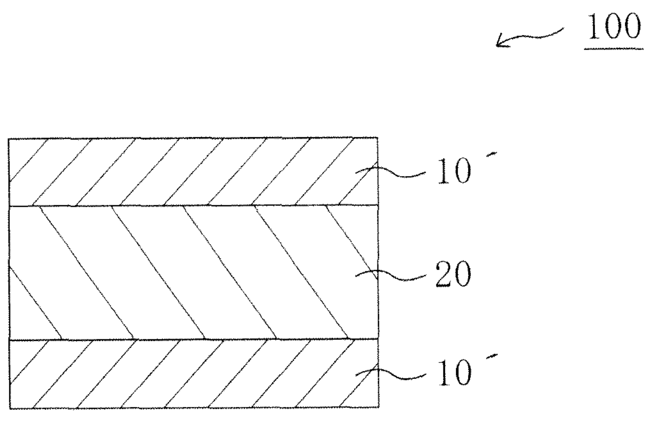

Fig. 5A

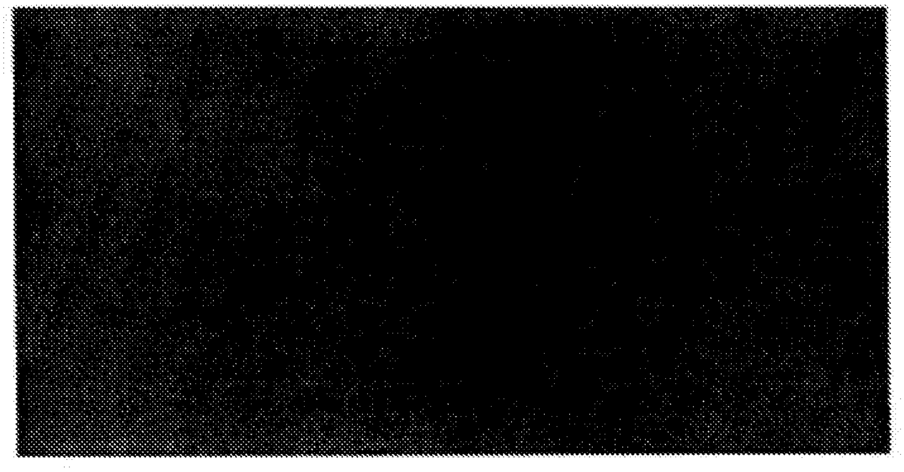

Fig. 5B

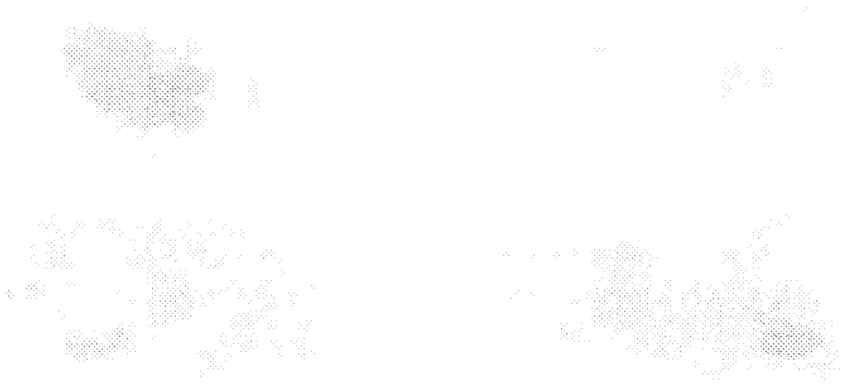

Fig. 6A

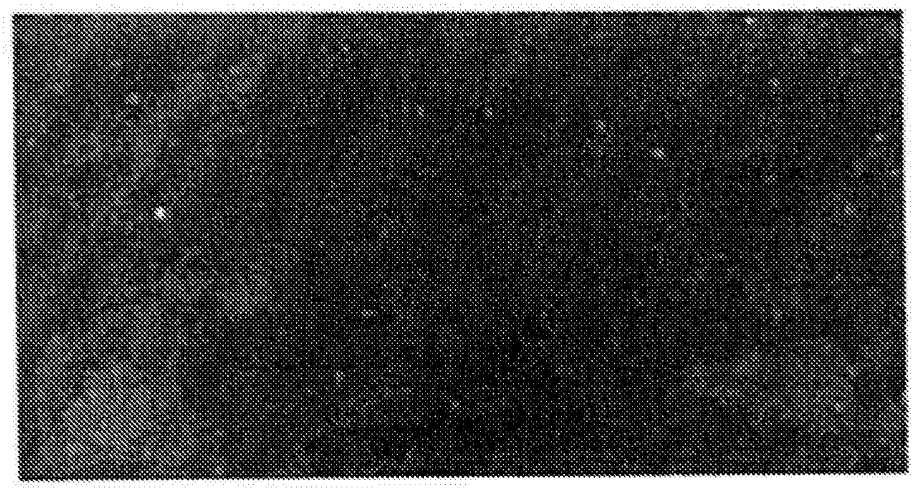

Fig. 6B

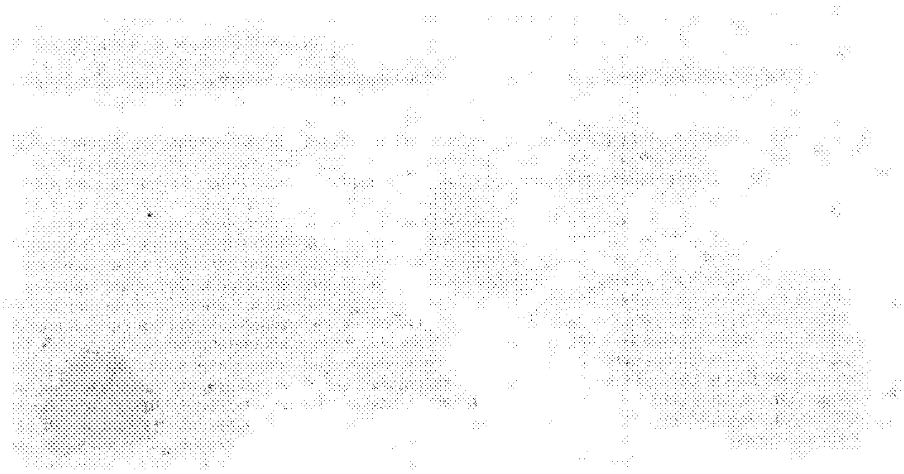

Fig. 7A

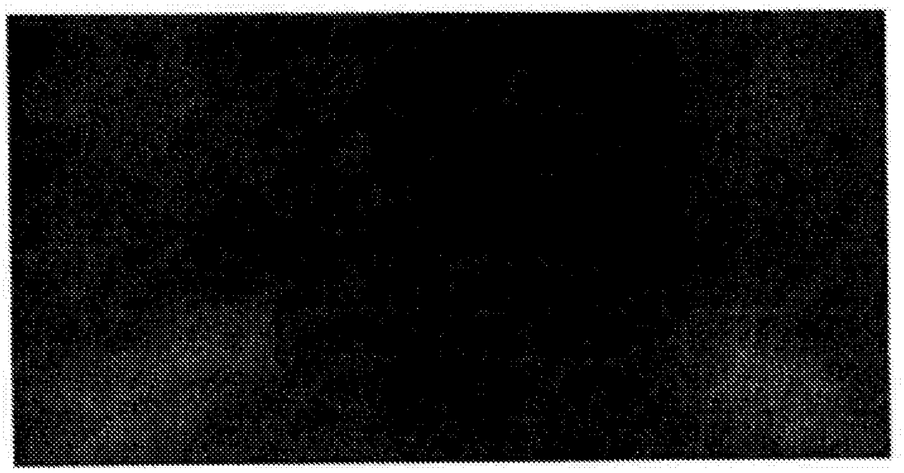

Fig. 7B

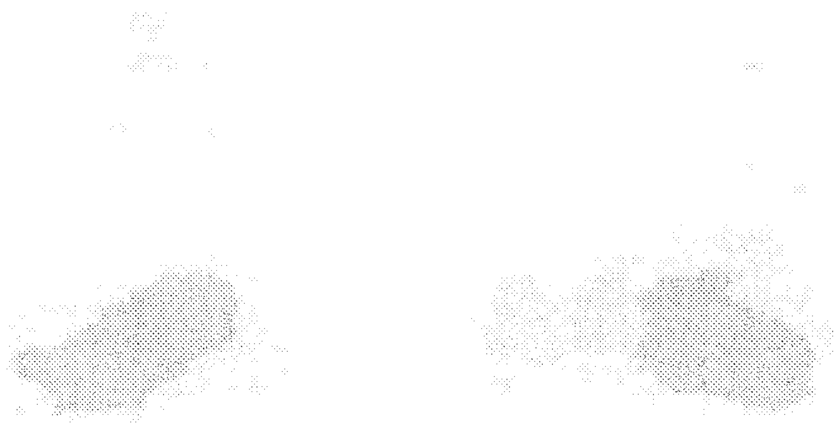

Fig. 8A

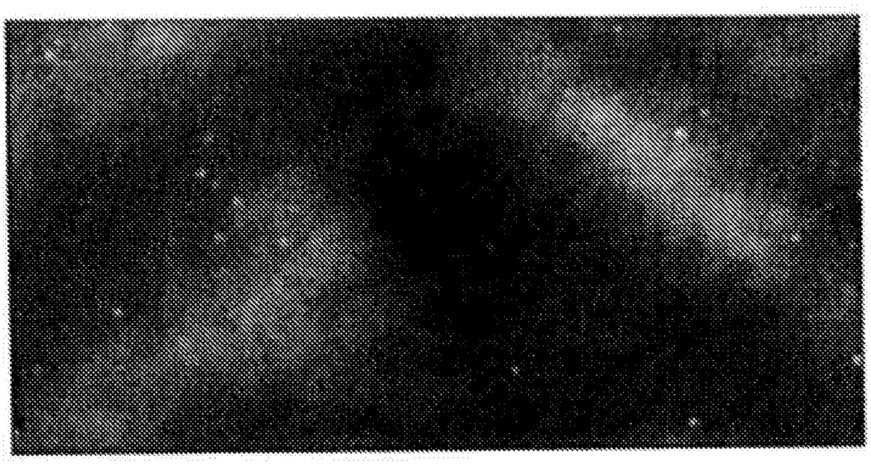

Fig. 8B

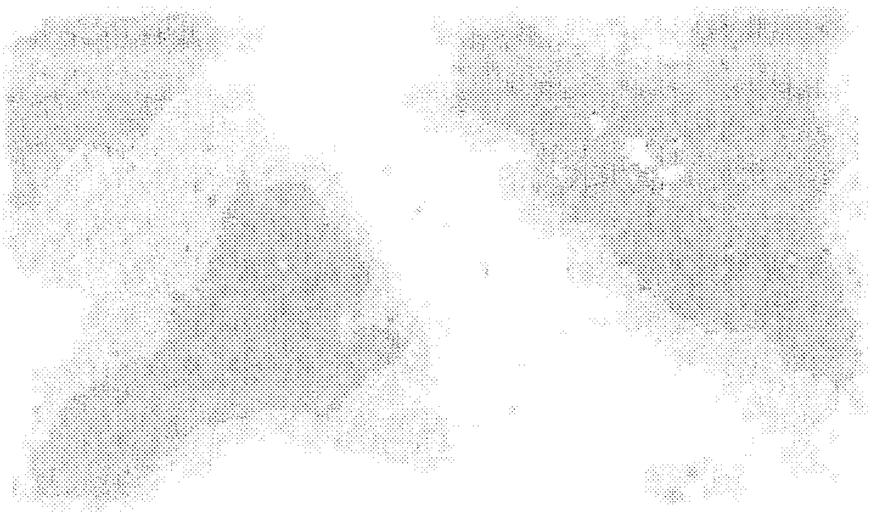

**INTERNATIONAL SEARCH REPORT**

International application No.
PCT/JP2010/051783

A. CLASSIFICATION OF SUBJECT MATTER
*G02B5/30*(2006.01)i, *B32B7/02*(2006.01)i, *G02F1/1335*(2006.01)i, *G02F1/13363*(2006.01)i

According to International Patent Classification (IPC) or to both national classification and IPC

B. FIELDS SEARCHED

Minimum documentation searched (classification system followed by classification symbols)
G02B5/30, B32B7/02, G02F1/1335, G02F1/13363

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-343521 A (Sumitomo Chemical Co., Ltd.), 14 December 2001 (14.12.2001), claims; paragraphs [0023], [0024] (Family: none) | 1-17 |
| Y | JP 2001-343522 A (Sumitomo Chemical Co., Ltd.), 14 December 2001 (14.12.2001), claims; paragraph [0022] (Family: none) | 1-17 |
| Y | WO 2007/97236 A1 (Nitto Denko Corp.), 30 August 2007 (30.08.2007), claims; description, page 16, line 9 to page 18, line 9; page 18, lines 11 to 17; fig. 1, 2 & JP 2007-226016 A & US 2009/0027596 A1 & KR 10-2008-0003775 A & KR 10-2008-0015511 A & CN 101310203 A | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 April, 2010 (21.04.10) | 18 May, 2010 (18.05.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/051783

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-281667 A (Sumitomo Chemical Co., Ltd.), 20 November 2008 (20.11.2008), paragraphs [0033], [0088] (Family: none) | 1-17 |
| Y | JP 2008-76706 A (Nitto Denko Corp.), 03 April 2008 (03.04.2008), claims; fig. 1, 2 (Family: none) | 7-9,16,17 |
| Y | JP 2008-102227 A (Nitto Denko Corp.), 01 May 2008 (01.05.2008), claims; paragraphs [0094], [0095]; fig. 1, 2, 5 (Family: none) | 7-9,16,17 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005049398 A
- JP 2000121831 A
- JP 2001337225 A
- JP 2003315538 A
- JP 2004046065 A
- JP 2006178389 A
- JP 2003287623 A
- JP 2008180961 A


### Non-patent literature cited in the description


- *Journal of Applied Physics,* 1999, vol. 38, 748
- **C. Destrade et al.** *Mol. Cryst. Liq. Cryst.,* 1981, vol. 71, 111
- **B. Kohne et al.** *Angew. Chem.,* 1984, vol. 96, 70
- **J.M. Lehn et al.** *J. Chem. Soc. Chem. Commun.,* 1985, 1794
- **J. Zhang et al.** *J. Am. Chem. Soc.,* 1994, vol. 116, 2655